# EUROPÄISCHE PATENTANMELDUNG

(11) **EP 4 844 186 A1**
(43) Veröffentlichungstag der Anmeldung: **25.11.2026**
(21) Anmeldenummer: 26179741.9
(22) Anmeldetag: 19.05.2026
(51) Int. Cl.: E06B 11/08, E05F 15/73, E05F 15/632, G01S 13/88, G07C 9/15

(54) **DURCHGANGSANLAGE UND VERFAHREN ZUR ANSTEUERUNG EINER SPERRSTRUKTUR DERSELBEN**

(30) Priorität: 19.05.2025 DE 102025119211
(71) Anmelder: Wanzl GmbH & Co. KGaA, 89340 Leipheim (DE); Sensotek GmbH, 73061 Ebersbach (DE)
(72) Erfinder: Lutzenberger, Thomas, Loppenhausen (DE); Nieß, Rainer, Reichenbach (DE)

(57) **Zusammenfassung**

Die Erfindung bezieht sich auf eine Durchgangsanlage zur Bereitstellung eines Durchgangsweges, der durch eine Sperrstruktur selektiv sperr und freigebar ist. Die Sperrstruktur ist hierbei beispielsweise durch ein bewegbares oder verlagerbares Bauteil, insbesondere einen schwenkbaren Flügel, ein Drehkreuz, eine Stange, eine bewegbare Scheibe oder eine Klappe gebildet. Die Bewegung oder Verlagerung der Sperrstruktur kann durch eine Antriebseinrichtung bewerkstelligt werden oder auch unter der Wirkung von Kräften veranlasst werden, die eine Person welche den Durchgangsweg zu durchschreiten beabsichtigt auf diese Sperrstruktur aufbringt. Der Selektionsprozess, der die Freigabe oder Sperrung des Durchgangsweges veranlasst, wird hierbei unter Einbindung einer Sensoreinrichtung und einer elektronischen Steuereinrichtung abgewickelt, welche auf der Zugangsseite der Durchgangsanlage in diese integriert ist. Weiterhin richtet sich die Erfindung auch auf ein Verfahren zur Ansteuerung der Sperrstruktur oder einer Antriebs- oder Verriegelungseinrichtung derselben. Erfindungsgemäß ist die Sensoreinrichtung als 3D-Radarsensoreinrichtung ausgelegt, so dass durch diese Raumdaten generiert werden, wobei diese Raumdaten einer Mustererkennung unterzogen werden. Zu den erkannten Mustern werden Auslöseszenarien gewählt und die Aktuierung der Sperrstruktur erfolgt nach Maßgabe dieser Auslöseszenarien.

## Beschreibung

Die Erfindung bezieht sich auf eine Durchgangsanlage zur Bereitstellung eines Durchgangsweges, der durch eine Sperrstruktur selektiv sperr- und freigebar, ist. Die Sperrstruktur ist hierbei beispielsweise durch ein bewegbares oder verlagerbares Bauteil, insbesondere einen schwenkbaren Flügel, ein Drehkreuz, eine Stange, eine bewegbare Scheibe oder eine Klappe gebildet. Die Bewegung oder Verlagerung der Sperrstruktur kann durch eine Antriebseinrichtung bewerkstelligt werden oder auch unter der Wirkung von Kräften veranlasst werden, die eine Person welche den Durchgangsweg zu durchschreiten beabsichtigt auf diese Sperrstruktur aufbringt. Der Selektionsprozess, der die Freigabe oder Sperrung des Durchgangsweges veranlasst, kann hierbei unter Einbindung einer Sensoreinrichtung und einer elektronischen Steuereinrichtung abgewickelt werden, welche beispielsweise auf der Zugangsseite der Durchgangsanlage in diese integriert ist. Weiterhin richtet sich die Erfindung auch auf ein Verfahren zur Ansteuerung der Sperrstruktur oder einer Antriebs- oder Verriegelungseinrichtung derselben.

Aus DE 10 2020 110 695 A1 ist eine Durchgangsanlage der oben genannten Art bekannt, bei welcher die Sperrstruktur durch zwei Schwenktürflügel gebildet ist. Die Durchgangsanlage umfasst eine erste und eine zweite Seitenwange. Diese Seitenwangen sind unter Belassung des zwischen den Seitenwangen verlaufenden Durchgangsweges voneinander beabstandet. Die beiden Schwenktürflügel befinden sich bezogen auf die Längserstreckung des Durchgangsweges in dessen Mittenbereich, sie sind an die Seitenwangen bewegbar angebunden und sie sind jeweils motorisch in eine Freigabestellung und in eine Sperrstellung verlagerbar, insbesondere um Vertikalachsen schwenkbar.

Aus EP 2 687 664 A1 ist ebenfalls eine Durchgangsanlage bekannt. Diese umfasst eine Geländereinrichtung zur seitlichen Begrenzung eines Laufweges. Die Durchgangsanlage umfasst einen Schwenkflügel, der um eine seitlich des Durchgangsweges positionierte und vertikal ausgerichtete Achse schwenkbar verlagerbar ist und hierbei in eine Sperr- und in eine Freigabestellung bringbar ist.

Aus EP 3 279 423 B1 und EP 2 038 503 B1 sind Durchgangsanlagen bekannt, bei welchen im Bereich einer Pfostenstruktur ein Radarsensor vorgesehen ist, durch welchen erkennbar ist, ob sich eine Person einem Schwenkflügel nähert. Die Verlagerung des Schwenkflügels erfolgt in Verbindung mit einer elektromechanischen Antriebseinrichtung die elektronisch angesteuert wird. Der Radarsensor hat einen durch seine Reichweite definierten Erfassungsbereich. Die Bewegung von Objekten in diesem Erfassungsbereich wird anhand des sog. Dopplereffekts erkannt. Die Erkennung eines von einem Dopplereffekt begleiteten Sensorereignisses hat ggf. unter Abfrage weiterer Bedingungen die Aktivierung der Antriebseinrichtung zur Folge.

Durchgangsanlagen oder auch sog. Gates der oben angegebenen Art finden in großer Breite Anwendung bei der Abwicklung von Durchgangskontrollen von Personen zu und aus abgegrenzten Zonen. Diese Anlagen werden hierbei im Zugangsbereich zu der abgegrenzten Zone oder an einem Ausgangsbereich aus dieser, z.B. im Ausgangsbereich einer Self-Checkout Zone installiert.

Der Erfindung liegt die Aufgabe zugrunde, Lösungen zu schaffen, durch welche es möglich wird, bei Durchgangsanlagen der eingangs genannten Art, die Aktivierung des Sperrorganes, insbesondere seine Verbringung in einen Freigabezustand in einer gegenüber bisherigen Herangehensweisen verbesserten Form abzuwickeln.

Die oben genannte Aufgabe wird erfindungsgemäß gelöst durch eine Durchgangsanlage zur Einrichtung eines selektiv sperrbaren Durchgangsweges, mit:
- einer Sperrstruktur, die in eine Sperrstellung bringbar ist, in welcher der Durchgangsweg gesperrt ist und die in eine Freigabestellung bringbar ist, in welcher der Durchgangsweg freigegeben ist, so dass dieser von einer Person passierbar ist;
- einer Antriebseinrichtung zur Verlagerung der Sperrstruktur aus der Sperrstellung in die Freigabestellung,
- einer Steuereinrichtung zur Ansteuerung der Antriebseinrichtung und;
- einer Radareinrichtung zur Erfassung einer für die Steuereinrichtung relevanten Präsenz eines Objektes,
- wobei die Radareinrichtung derart ausgebildet und konfiguriert ist, dass diese über die Präsenz des Objektes hinaus hinsichtlich der Raumform des Objektes und hinsichtlich seiner Dynamik im Raum indikative Raumpunktdaten generiert und
- die Steuereinrichtung derart ausgebildet und konfiguriert ist, dass die Ansteuerung der Antriebseinrichtung den für die Raumform des erfassten Objektes und dessen Dynamik im Observationsbereich indikativen Raumpunktdaten Rechnung trägt.

Hierbei kann die Steuereinrichtung als Radareinrichtung ausgeführt sein.

Weiterhin kann die Steuereinrichtung als 3D Radareinrichtung für sicherheitsrelevante Bewegungsansteuerungen durch Selbstüberwachung verwendet werden.

Dadurch wird es auf vorteilhafte Weise möglich, die Ansteuerung des Sperrstruktur nach insbesondere dynamisch angepassten Modellen oder Modi vorzunehmen, die unter Berücksichtigung der Raumform des erfassten Objektes, eines Objektverbundes oder Trosses, seiner Position im Raum und der Bewegung desselben im Raum, sowie auch seiner Mikrobewegungen in sich selbst, situationsspezifisch selektiert und abgestimmt werden. Es kann damit unterschiedlichsten Präsenzsituationen von Personen und Objekten im Bereich des Gates in einer auf diese Präsenzsituationen und Momentanbewegungen jeweils optimiert abgestimmten Weise Rechnung getragen werden. Es können zudem Situationen erkannt werden, die die Beibehaltung des aktuellen Stellzustandes der Sperrstruktur bedingen, oder eben eine Verlagerung derselben erfordern, es können auch Situationen erkannt werden, die einen Warnmodus oder Notbetriebszustand aktivieren, z.B. die Ausgabe eines akustischen Ereignisses, wenn aus den Raumdaten erkennbar ist, dass das Gate in geschlossenem Zustand durchwandert wird, d.h. die Art der Passage von der vorgesehenen Nutzung in irgendeiner Form abweicht, dieser unzulässige Zustand kann insbesondere auch darin bestehen, dass eine Diskrepanz zwischen bestimmten Kriterien im Bereich eines Bezahlterminals oder eines Autorisierungserwerbes für die Passage und Kriterien oder Informationen besteht, die über die 3D-Radarsensorik generiert werden. Weiterhin kann die Aktivierung des Sperrorganes, insbesondere seine Verbringung in einen Freigabezustand unter Berücksichtigung von Erkennungs- und/oder Szenarienmerkmalen in Echtzeit und/oder umweltunabhängigen Sicherheitsrelevanten 3D Radar Sensorik detektiert und erfasst werden. Dies ist auch möglich, umweltunabhängig, d.h. unabhängig von Störeinflüssen wie z.B. Staub, Schmutz oder künstliches oder natürliches Licht.

Durch die erfindungsgemäß vorgesehene und auf die Erfassung von dynamischen Raumdaten, insbesondere einer finiten Voxel-, oder Raumpixel-, oder Raumpunktewolke ausgelegte Radarsensoreinrichtung wird es möglich, zunächst jene Objekte unter relativ hoher 3D-Auflösung zu erkennen, die in einen Observationsbereich hinein wandern. Es kann dann der jeweilige Ort der erkannten Struktur oder Person innerhalb des digitalen und insoweit virtuellen Abbildes des Observationsbereiches erkannt werden. Es können weitere Eigenschaften der erkannten Struktur und deren Bewegungsverhalten durch Analyse der dynamischen Daten gewonnen werden. Mit diesen Informationen kann dann ein Auslösezeitpunkt für den Antrieb der Sperrstruktur und deren Betriebsweise insgesamt, also auch deren aktives Schließen abgestimmt werden und auch der Antrieb der Sperrstruktur kann insbesondere hinsichtlich des Eindringens oder der Bewegung der Sperrstruktur in den Observationsbereich ablauftechnisch gesteuert werden, insbesondere hinsichtlich einer Kollisionsvermeidung zwischen den erkannten Objekten und der ebenfalls erkannten oder rechnerisch -z.B. in Verbindung mit einer Schwenkwinkelinformation numerisch modellierten Sperrstruktur. Es ist auch möglich, den in Durchgangsrichtung stromabwärts der Sperreinrichtung liegenden Raumbereich oberhalb des Laufweges zu observieren und die Aktivierung der Sperreinrichtung von der Erfassung der Präsenz und Gestalt von Objekten in diesem Abschnitt des Raumbereiches oberhalb des Laufweges abzustimmen. Um beispielsweise ein Schwenken der Sperrstruktur in Offenstellung zu verhindern, wenn sich in dem Bereich hinter dem Sperrstruktur ein Objekt/Person befindet.

Gemäß einer besonders bevorzugten Ausführungsform der Erfindung ist die Durchgangsanlage derart ausgebildet, dass die Bewegungsgeschwindigkeit des erfassten Objektes oder auch die jeweilige Bewegungsgeschwindigkeit separater im Erfassungsbereich erfasster Objekte ermittelt wird. Insbesondere in Kombination mit dieser Maßnahme wird vorzugsweise auch die Raumrichtung der Bewegung des Objektes und dessen momentane Position im Erfassungsbereich ermittelt. Mit diesen Informationen kann prognostiziert werden, wann der Zeitpunkt vorliegt, in welchem der Anwender dem Sperrstruktur derart nahe ist, dass dieser Zeitpunkt der unter Einrechnung eines Sicherheitsabstandes letzte Zeitpunkt ist, zu welchem das Sperrstruktur zu betätigen ist um eine Kollision zu vermeiden oder den Anwender zu veranlassen stehen zu bleiben oder seinen Gang zu verlangsamen.

Aus den durch die Sensoreinrichtung erhobenen Raumdaten wird in vorteilhafter Weise ein digitaler Raumpixel-Zwilling des Anwenders oder eines Objektes wie beispielsweise eines Einkaufswagens im virtuellen Observationsraum modelliert und diese Bewegung des digitalen Zwillings im virtuellen Raum unter Anwendung von Mustererkennungsansätzen mit Funktionsszenarien verknüpft, welche die Aktivierung der Antriebseinrichtung der Sperrstruktur veranlassen. Auch die Verlagerung der Sperrstruktur findet vorzugsweise Eingang in die Raumdatenerfassung und aus der Gesamtheit der erfassten Daten kann dann im wesentlichen in Echtzeit auch eine Ansteuerung der Sperrstruktur zum Öffnen und Schließen sowie zudem auch zur Kollisionsvermeidung zwischen dem Anwender und der sich bewegenden Sperrstruktur erreicht werden.

Gemäß einem besonderen Aspekt der vorliegenden Erfindung wird anhand der erkannten Verteilung der von einem Körper oder Körpern im Erfassungsraum generierten Raumpunktewolke ermittelt, ob die erkannte Präsenz eines Objektes oder Anwenders sich als Präsenz darstellt, die ein Öffnen oder Schließen der Sperrstruktur erfordert oder sich ggf. noch als Aufenthalt eines Anwenders z.B. zur Abwicklung eines Bezahlvorganges darstellt, der noch kein Öffnen der Sperrstruktur, also insbesondere noch kein Schwenken eines Armes oder einer Türklappe in eine Freigabeposition erfordert.

Wie oben bereits angesprochen kann in Verbindung mit der sensortechnischen Erhebung von Raumforminformationen zu einer erkannten Präsenz im Observationsbereich dann ein unzulässiger Zustand oder Vorgang beispielsweise eine unzulässige Überwindung der Sperrstruktur oder ein anderweitig unzulässiges Durchqueren der Durchgangsanlage (z.B. Übersteigen, Unterkriechen oder Tailgating) ermittelt werden.

Anhand des erfindungsgemäßen Konzeptes kann anhand der erkannten Verteilung der Raumpunktewolke der Öffnungszeitpunkt und/oder der Schließzeitpunkt festgelegt werden und auch die Öffnungsrichtung der Sperrstruktur kann jeweils situationsspezifisch abgestimmt werden.

Die Radareinrichtung ist gemäß einem besonderen Aspekt der vorliegenden Erfindung derart gestaltet, dass diese wenigstens einen 3D-Radarsensor umfasst. Dieser 3D-Radarsensor kann in vorteilhafter Weise im Nahbereich der Sperrstruktur angeordnet werden und einen Raumbereich erfassen, der sich über dem Durchgangsweg erhebt. Hierbei kann dann der 3D-Radarsensor insbesondere in einem Eckbereich angeordnet werden, der sich als vertikaler Schnitt aus einer sich entlang eines Längs-Randes des Durchgangsweges erstreckenden Vertikalebene und einer Sperrebene der Sperrstruktur ergibt. Bei dieser Anordnung kann dann weiterhin der 3D-Radarsensor derart ausgebildet und angeordnet werden, dass dieser den Torsobereich eines den Durchgangsweg durchquerenden Anwenders erfasst. Die Radareinrichtung kann mehrere vorzugsweise auf unterschiedlichen Höhenniveaus angeordnete oder in unterschiedliche Raumrichtungen blickende Radarsensoren umfassen, so dass diese Radarsensoren beispielsweise unterschiedliche Raumbereiche oberhalb des Durchgangsweges scannen und hinsichtlich der in diese Überwachungsräume eindringenden Objekte, Raumdaten generieren und damit ein digitales Abbild der realen räumlichen und zeitlichen Objektpräsenz im Observationsraumbereich generieren.

Die Radareinrichtung kann in weiterhin vorteilhafter Weise so ausgebildet sein, dass diese einen oberen Radarsensor und einen unteren Radarsensor umfasst. Hierbei kann dann einer dieser Radarsensoren als 3D-Radarsensor (XYZ Raumpunkte mit Geschwindigkeit und Richtungsinformation) ausgebildet werden und einer der anderen Radarsensoren oder der einzige weitere Radarsensor als 2D-Radarsensor (XY Raumpunkte mit Geschwindigkeit und Richtungsinformation) ausgebildet sein. So können Sensoren die lediglich Präsenz erfassen mit 3D-Radarsesnoren kombiniert werden, die Präsenz und Raumform erfassen. Die Konfiguration kann dann insbesondere so getroffen sein, dass die untere Radareinrichtung als 1D- ( Raumpunkte in X Achse mit Geschwindigkeit und Richtungsinformation) oder 2D-Radar ausgebildet ist und die obere Radareinrichtung als 3D-Radar ausgebildet ist. Hierbei kann dann wiederum die Erfassungstiefe der unteren Radareinrichtung in eine von der Sperrstruktur wegweisende Richtung größer gewählt werden, als die Erfassungstiefe der 3D-Radareinrichtung. Die Erfassungsräume der Radareinrichtung können Informationen liefern, die unterschiedlichen Betrachtungen zugrunde gelegt werden. So kann eine bodennahe Überwachung primär der relativ ungenauen jedoch noch hinreichend zuverlässigen Erfassung der Präsenz eines oder mehrerer Objekte dienen, wogegen eine hochauflösende Erhebung der 3D-Raumdaten zu Objekten in einem etwas höheren Bereich insbesondere zwischen 50cm und 180cm zur Objektidentifizierung und Objektklassifizierung herangezogen wird. Die Aktivierung der 3D-Raumdatenerfassung kann im Zuge einer vorausgehenden Erfassung einer Objektpräsenz mittels eines 1D oder 2D-Radars oder eines anderweitigen Näherungssensorsystems veranlasst werden.

Eine besonders vorteilhafte Anordnung von zwei Radarsensoren kann hierbei darin bestehen, dass der untere Radarsensor vom Bodenbereich in vertikaler Richtung nach oben um 15 bis 35cm, insbesondere ca. 30cm beabstandet ist und sich der zweite Radarsensor auf einer Höhe zwischen 80 und 120cm, insbesondere 90cm befindet.

Der 3D-Radarsensor kann stationär angeordnet sein, oder ggf. auch an die Sperrstruktur angebunden sein, so dass dieser mit der Sperrstruktur verlagerbar ist.

Der 3D-Radarsensor kann in vorteilhafter Weise dazu herangezogen werden, in Form einer Echtzeitdatenauswertung ein Feedback zur Position der Sperrstruktur zu generieren um damit eine koordinierte Kollisionsvermeidung mit den weiteren erkannten Objekten zu bewirken.

Der 3D-Radarsensor kann auch zur Erkennung von Gesten herangezogen werden, so dass dieser letztlich als Interface fungieren kann. Die Wirksamkeit dieser Gesten kann ggf. davon abhängig gemacht werden, ob in Verbindung mit den Gesten ein weiteres Kriterium erfüllt ist, wie insbesondere die Verwendung einer bestimmten Gerätschaft, z.B. eines Bestückerwagens. So kann beispielsweise ein Marktmitarbeiter der aus dem Bereich einer Außenablage einen Warenträger wieder durch den Eingangsbereich des Marktes zurückfährt einerseits als Marktmitarbeiter erkannt werden, das Gate öffnet jedoch erst bei einer bestimmten Bewegung oder Geste des Marktmitarbeiters, z.B. einer typischen Geste für das Öffnen eines Tores - z.B. dem Heben der Hand auf Torsohöhe von unten nach oben.

Mit den mittels des 3D-Radarsensors gewonnenen und die Realität mit vernachlässigbar geringem Zeitverzug hochauflösend abbildenden digitalen Rauminformationen können auch Sondersituationen erkannt werden die besondere Betriebsmodi herbeiführen, so können insbesondere Kinder und ggf. begleitende Tiere wie insbesondere Hunde erkannt werden und die Ansteuerung der Sperrstruktur kann diesen Sondersituationen Rechnung tragen, indem beispielsweise die maximale Verlagerungsgeschwindigkeit der Sperrstruktur temporär abgesenkt wird oder eine besonders sensible Kollisionserfassung und Kraftbegrenzung gewählt wird oder die Sperrstruktur in eine Richtung öffnet, die zu keiner Kollision führt, also insbesondere in Laufrichtung. Auch anderweitige Strukturen wie markteigene Gerätschaften, Ameisen, Bestückerwägen, Rollatoren, Gehhilfen, Kisten uvm. können aus den mittels des 3D-Radarsensors hochauflösend erfassten Raumdaten erkannt und werden und diese Erkennung kann eine Qualifizierung der aktuellen Situation veranlassen und diese kann dann ablauftechnisch weiter berücksichtigt werden. Insgesamt werden vorzugsweise über die 3D-Radarsensoren Personen und Objekte relativ hochauflösend oder zumindest hinreichend hinsichtlich ihrer Gestalt, sowie auch hinsichtlich ihrer Bewegung im Raum erkannt und Form, Ort und Bewegung bilden die Grundlage für die Auswahl von Stuer- oder Ablaufszenarien, ihre zeitlicher Verortung und ggf. parametrischen Abstimmung und der letztlich durch Anwendung dieser Ablaufszenarien veranlassten Ansteuerungsmaßnahmen insbesondere bezüglich des Antriebs der Sperrstruktur.

Die Sperreinrichtung kann wie eingangs schon angegeben so ausgebildet sein, dass diese eine erste Sperrstruktur umfasst, die um eine Vertikalachse schwenkbar ist wobei hier vorzugsweise wenigstens einer der Radarsensoren im Bereich dieser Vertikalachse angeordnet ist. Die Sperreinrichtung kann auch als Doppelflügelsperre ausgebildet sein und hierbei dann eine zweite Sperrstruktur umfassen, wobei dann dieses zweite Sperrstruktur um eine zweite Vertikalachse schwenkbar ist, wobei der Durchgangsweg zwischen diesen beiden Vertikalachsen hindurch verläuft. Im Bereich der zweiten Vertikalachse ist dann vorzugsweise ebenfalls eine Radareinrichtung vorgesehen. Diese weitere Radareinrichtung blickt dann ebenfalls in den sich oberhalb des Durchgangsweges erhebenden Raumbereich. Die von den beiden 3D-Radareinrichtungen sensortechnisch gescannten Raumbereiche können sich überlappen. Die hierbei redundant generierten Raumdaten können dazu verwendet werden die jeweils generierten Daten aufeinander abzustimmen.

Die 3D-Radareinrichtung kann so ausgebildet sein, dass im mittleren Z-Achsbereich des obervierten Raumes die Raumpunktdaten als sog. Voxel mit einer Kantenlänge von etwa 40 mm oder einer Winkelauflösung von etwa 1° erhoben oder vorzugsweise jedoch mit feinerer, d.h. höherer Auflösung werden. Stark vereinfacht und bildhaft lässt sich die Erfassung der Raumdaten derart beschreiben, dass der observierte Raumbereich mit einer Auflösung in der Größe eines "Würfelzuckers" gescannt wird. Zu jedem derartigen Würfelelement liegt dann zu seiner Ortsinformation die Angabe vor, ob es aktuell als von Festkörpermaterie erfüllt oder als leer, also nur mit Umgebungsatmosphäre erfüllt zu betrachten ist. Soweit das 3D-Scannen innerhalb eines statischen Rasters erfolgt, kann jedes Voxel alleine durch seine Adresse und eben seinen Belegungswert abgespeichert werden, die Raumdaten des Voxel können dann von der Adresse des Voxel aus diesem zugeordnet werden. Die Mustererkennung kann so komprimiert abgewickelt werden, dass diese direkt über die Adressen der Voxel arbeitet und die Abbildung im Euklidschen Raum anhand der konkreten kartesischen Eckpunktkoordinaten oder kartesischen Zentrumskoordinaten des jeweiligen Voxel übergangen wird. Es können auch die von der jeweiligen 3D-Radarsensoreinrichtung gewonnenen Messdaten umgerechnet werden in Daten einer 3D-Matrix mit anderer räumlicher Rasterauflösung.

Die erfindungsgemäß in die Durchgangsanlage eingebundene 3D-Radareinrichtung umfasst vorzugsweise eine eigene Rechnereinrichtung mit relativ hoher Rechenleistung die eine Echtzeitanalyse der erfassten Raumpunktwolken ermöglicht und bereits bestimmte Auswertungsergebnisse und Schaltfunktionen autonom liefern kann. Im engen Umfeld der Durchgangsanlage können zusätzliche weitere Sensoren wie Lichtschranken, Scanner und beispielsweise feldelektrische Näherungssensoren vorgesehen sein, die vorzugsweise an die lokale Rechnereinrichtung der 3D-Radareinrichtung angebunden sind. Die Rechnereinrichtung der 3D-Radareinrichtung kann so ausgebildet sein, dass diese eine Ausgangsschnittstelle bereitstellt, durch welche die erfassten Raumdaten in einem transferfähigen Datenformat exportierbar sind. Insbesondere können die seitens der 3D-Radareinrichtung generierten Informationen als 3D-Raumpixel mit kartesischen Koordinaten oder Polarkoordinaten abrufbar sein und entweder einen eigenen Zeitwert oder Zeitstempel haben oder den Zeitwert der Abfrage erhalten.

Die 3D-Radarsensoreinrichtung kann so ausgebildet sein, dass deren Radar-Frequenz im Bereich von 60 GHz oder mehr liegt. Der Erfassungsbereich kann praktisch "waagrechtpyramidal" oder "keulenförmig" vom Sensor aus aufgeweitet erscheinen. Der Sensor liegt dann im Apex dieses Raumes. Der Erfassungsbereich kann sich beispielsweise in vertikaler Richtung mit einem Blickwinkel aufweiten der sich von dem Blickwinkel unterscheidet mit welchem sich der Erfassungsbereich in einer horizontalen Ebene aufweitet. So kann der Öffnungswinkel in einer Raumebene im Bereich von 60° bis 110°, vorzugsweise bei 80° liegen und der Öffnungswinkel in einer hierzu orthogonalen Raumebene im Bereich von 20 bis 90°, insbesondere 34° liegen. Weiterhin besteht die Möglichkeit auf beiden Achsen mehr als 120° zu realisieren. Hierbei gilt es zu berücksichtigen, dass man die Radarabstrahlgeometrien je nach Applikationsanforderung bei Bedarf auch ändern kann. Somit gilt, dass je größer der Öffnungswinkel, desto weniger Radare sind notwendig.

Die Geometrie der Raumkeulen stellt sich dann als an zwei gegenüberliegenden Seiten abgeflacht dar.

Die 3D-Radarsensoren können gemäß einem besonderen Aspekt der vorliegenden Erfindung so angeordnet werden, dass sich deren Erfassungsbereiche überlagern. Die entsprechen redundanten Informationen können zur Determinierung eines Summenobjektes verwendet werden, d.h. unter Rückgriffnahme auf doppelt erfasste Raumdaten wird ein Objektfittingprozess abgewickelt durch welchen die jeweils zunächst separat sensorisch erhobenen 3D-Spatialinformationen kombiniert und zu einem Gesamtdatensatz gefittet werden.

Es ist weiterhin möglich, die im Bereich des Gates erfassten 3D-Rauminformationen in Verbindung mit 3D-Rauminformationen die in einem Bezahlbereich ermittelt wurden abzugleichen und bei Erfüllung definierter Kriterien mit dieser Information ein Vorliegen einer Berechtigung zu erkennen und das Gate zu öffnen oder eine Öffnung zuzulassen bis eben eine entsprechende Präsenz und Bewegung im Bereich des Gates erkannt wird.

Es ist möglich, einen insgesamt zu oberservierenden Bereich mit mehreren 3D-Radareinrichtungen zu erfassen und die jeweils erhobenen Daten in einen generischen dynamischen Raumdatensatz einzufügen oder mit diesem zu verknüpfen. Die von den Sensoren erfassten 3D-Daten können dann unterschiedlichen Kontrollszenarien zugrunde gelegt werden von welchen das Öffnen und das Schließen und die kollisionsreduzierte Bewegung der Sperrstrukturer nur Teilszenarien darstellen. Es können insoweit insbesondere 3D-Rauminformationen aus dem Bezahlbereich mit Rauminformationen im Gatebereich verknüpft verarbeitet werden.

Gemäß einem weiteren besonderen Aspekt der vorliegenden Erfindung werden die sensorisch erhobenen 3D- oder Spatialdaten durch eine Eichprozedur bearbeitet, welche 3d- oder Spatialdaten berücksichtigt die durch Strukturen generiert werden die sich permanent im Überwachungsbereich befinden. Weiterhin kann die 3D- oder Spatialdatenerhebung auch mit Raumdaten verprobt und kalibriert werden die im Rahmen der Verlagerung der Sperrstruktur d.h. der Durchwanderung des Observationsraumes durch die Sperrstruktur generiert werden, es werden also sensorisch erfasste Raumdaten mit rechnerisch z.B. aus der bekannten Geometrie der Sperrstruktur und der anderweitig bekannten Winkelstellung derselben bestimmten Raumdaten abgestimmt.

Nach dem erfindungsgemäßen Konzept ist es möglich, bei der Erfassung einer Person in dem Erfassungsbereich der Sensoreinrichtung die Auswertung der Spatialdaten so abzuwickeln, dass aus diesen Daten Ereignisse oder Zustände wie die Schulterposition einer erkannten Person, die Kniebeugung, oder das Atmen erkannt werden. Aus derartigen erkannten Sachverhalten kann dann erkannt und algorithmisch relevant abgeleitet werden, ob ein Anwender zwar im Überwachungsberiech anwesend ist, aber noch nicht der Sperrstruktur zugewandt ist, oder in Laufrichtung des Durchgangsweges ausgerichtet ist. Es können die Ergebnisse aus mehreren Überwachungsbereichen verknüpft ausgewertet werden. So kann beispielsweise im Bereich eines Bezahlterminals die Präsenz und Raumform eines Anwenders relativ hochauflösend erfasst werden und der weitere Wegbereich zu potentiellen Ausgangsgates mit einer niedrigeren Auflösung erfasst werden, die jedoch noch eine Kontinuität der Erfassung der Bewegung des Anwenders zum ausgewählten Gate hin gewährleistet. Am letztlich vom Anwender ausgewählten Gate wird bei Erfüllung eines Laufwegs-Kontinuitätskriteriums bezüglich des Laufweges der Anwender nochmals mit höherer Auflösung räumlich erfasst, die so erhobenen Raumdaten werden mit den Raumdaten am Bezahlsystem nochmals abgeglichen und aus der nun erfassten Präsenz des Anwenders und seiner räumlichen Bewegung wird der Öffnungszeitpunkt des Gates errechnet und das Gate bei Erreichen dieses Zeitpunkts geöffnet. Es sind auch Konzeptionen möglich, bei welchen das Exit-Gate zunächst geöffnet ist und nur schließt, wenn die mittels der 3D-Radarsensoreinrichtung erfassten Raumformdaten der zugehenden Person ein Ablehnungskriterium erfüllen.

Gemäß einem weiteren besonderen Aspekt der vorliegenden Erfindung wird die erfindungsgemäß im Bereich der Durchgangsanlage vorgesehene 3D-Radareinrichtung in einer besonderen Position relativ zu einem Personendurchgangsbahnbereich angeordnet. Die Anordnung ist hierbei derart getroffen, dass sich die Erfassung zunächst auf die Annäherung zum Sensor und hierbei auf die Dynamik der Raumdaten hinsichtlich der Reduktion des Abstandes zur Sensoreinrichtung richtet ("Z-Achse"). Mit zunehmender Annäherung an die Sperrstruktur ergibt sich eine Zunahme der Dynamik in Querrichtung ("X-Achse"). Mit der hohen Auflösung der Rauminformation im Bereich der Sperrstruktur wird eine besonders präzise Überwachung von kollisionsrelevanten Zuständen ermöglicht. Die über die 3D-Radareinrichtung gewonnenen dynamischen Spatialdaten oder Voxel-Daten können in bestimmten Modellen auch als Polarkoordinaten verarbeitet werden. Die Annäherung an das Gate und die Bewegung im Eintrittsbereich stellt sich zunächst primär in den Radiusdaten dar. Die Annäherung an die Sperrstruktur stellt sich primär in den Winkeldaten dar. Alleine durch Verknüpfung der Radiusdaten mit den Winkeldaten kann für einen Basisbetriebsmodus ein Schwellwertkriterium definiert werden, nach welchem die Auslösung der Sperrstruktur abgewickelt wird. Mit diesen Polarkoordinaten lässt sich auch die Kollisionsvermeidung mit der Sperrstruktur auf vorteilhafte Weise mit geringer Rechnerleistung abwickeln insbesondere wenn die Sperrstruktur als Schwenkflügel ausgebildet ist und sich die Schwenkachse nahe der Sensoreinrichtung befindet.

Nach dem erfindungsgemäßen Konzept ist in einer Durchgangsanlage wenigstens ein mit einer eigenen Rechnereinrichtung ausgestatteter programmtechnisch konfigurierter und insoweit intelligenter, messender 3D-Radarsensor vorgesehen. Der 3D-Radarsensor kann so ausgebildet sein, dass der Antennen Öffnungswinkel FoV, (Fieldof View) etwa = 80°x 34°hat. Die Arbeitsfrequenz liegt vorzugsweise im 60 GHz Band und der Totbereich liegt unter 16cm. Die Updaterate liegt vorzugsweise bei ca. 50 ms. Die Öffnungswinkel können hardwaremäßig und softwaremäßig modifiziert, insbesondere eingegrenzt werden. Der erfindungsgemäße 3D-Radarsensor kann statische und dynamische Objekte erkennen. Der 3D-Radarsensor sieht sofort Bewegungsvektoren mit Geschwindigkeit in X, Y und Z-Richtung und arbeitet völlig unempfindlich gegen Lichtquellen jeglicher Art, sowie auch unempfindlich auf Nebel, Rauch oder Staub. Die Beleuchtungsintensität der Umgebung spielt keine Rolle. Der erfindungsgemäße Sensor ermöglicht ein punktgenaues Öffnen, ob Person oder Person mit Wagen. Es sind die Vor- und Nachlaufwege überwachbar, bezüglich dynamischer und statischer Objekte. Weiterhin wird eine Schwenkbereichsüberwachung nunmehr auch für stehende Objekte möglich. Mit dem erfindungsgemäßen Sensor und den durch diesen generierten Raumdaten zu belegten oder freien Bereichen des observierten Raumes wird eine Klassifizierung zwischen Personen (Lebewesen -Atmung) und Gegenständen ermöglicht. Die hohe Auflösung ermöglicht die Detektion und softwarebasierte Auswertung von Mikrobewegungen.

Mit der erfindungsgemäßen Sensoreinrichtung lassen sich Missbrauchssituationen wie Tailgating und Unterkriechen erkennen. Weiterhin können Sicherheitszonen observiert werden und ein Gegenlaufverstoß sowie ein unerlaubtes Übersteigen, ein Durchgang mit Trolley, ein unerlaubtes Offenhalten, ein gewaltsames Aufdrücken erkannt werden und auch ein Überwachen des Schwenkbereiches wird ermöglicht. Der erfindungsgemäße 3D-Radarsensor ist vorzugsweise auf üblicher Brüstungshöhe am Seitenrand eines Laufweges angeordnet und blickt in den Raum oberhalb dieses Laufweges hinein. Bei Eintritt in den Erfassungsbereich des 3D-Radarsensors werden 3D-Daten generiert die in Verbindung mit einem Zeitwert beschreiben, wo sich im erfassten Raumbereich eine Struktur oder eine Person befindet.

Der erfindungsgemäß eingesetzte 3D-Radarsensor basiert auf dem Prinzip, dass dieser in der Frequenz variierende Radiowellen über einen bestimmten Zeitraum aussendet, die von Objekten in der Umgebung reflektiert werden. Der Sensor misst die zurückkehrende Signalstärke und die Zeit, die die Wellen benötigen, um zum Sensor zurückzukehren. Zusätzlich berechnet er die Geschwindigkeiten der detektierten Raumpunkte. Anhand dieser Messwerte kann er mit feiner räumlicher Rasterung, also hoher räumlicher Auflösung die Entfernung, Geschwindigkeit und die Position von Objekten im Raum berechnen - und zwar in drei Dimensionen: Höhe, Breite und Tiefe. Die grundlegenden Schritte, wie ein 3D-Radarsensor arbeitet sind Senden von Radiowellen: Der Sensor sendet in der Frequenz variierende elektromagnetische Radiowellen über einen bestimmten Zeitraum aus, die sich mit Lichtgeschwindigkeit ausbreiten. Reflexion: Wenn die Radiowellen auf ein Objekt treffen z.B. eine Person oder einen Einkaufswagen, werden sie reflektiert und kehren zum Sensor zurück. Messung der Zeit: Der Sensor misst, wie lange es dauert, bis die gesendeten Wellen zurückkehren. Diese Zeit wird genutzt, um die Entfernung zum Objekt zu berechnen. Nach mehreren Messungen über einen bestimmten Zeitraum werden die Geschwindigkeiten der detektierten Raumpunkte berechnet Erstellung eines 3D-Modells: Der Sensor erfasst die Position des Objekts in allen drei Dimensionen (X, Y und Z) und kann so ein dreidimensionales Bild des Objektes und auch von der Umgebung in der es sich befindet erzeugen.

3D-Radarsensoren werden erfindungsgemäß in eine Durchgangsanlage eingebunden, um deren Funktionalität zu verbessern. Diese Sensoren helfen das Öffnen und Schließen der Sperrorgane sicherer und effizienter zu gestalten. Sie ermöglichen es, Bewegungen und Objekte in einem dreidimensionalen Raum zu erkennen, und ermöglichen es potenzielle Kollisionen oder Gefährdungen zu vermeiden.

3D-Radarsensoren werden erfindungsgemäß in Durchgangsanlagen eingebaut, um die Anwesenheit von Personen oder Objekten in der Nähe zu erkennen. Sie erkennen nicht nur die Bewegung in der Durchgangsanlage, sondern auch die Entfernung und Position der Objekte im Raum.

Die erfindungsgemäße Lösung ermöglicht die Erkennung von Hindernissen. 3D-Radarsensoren können in der Nähe der Sperrstruktur Hindernisse erkennen, die den Antrieb der Sperrstruktur unterbinden. Sie helfen dabei, sicherzustellen, dass die Sperrstruktur sich nicht bewegt, wenn sich noch etwas im Weg befindet, wodurch Verletzungen oder Schäden an Personen oder Gegenständen vermieden werden.

Der 3D-Radarsensor kann verfolgen, wie sich eine Person in der Nähe der Durchgangsanlage bewegt, und so genau bestimmen, wann sie sich nah genug an der Sperrstruktur befindet, um diese zu öffnen.

Im Vergleich zu anderen Technologien wie Infrarot-Sensoren funktioniert ein 3D-Radar auch bei schlechten Lichtverhältnissen oder durch Licht- und Temperaturveränderungen hindurch. Er ist robust gegenüber Störungen, wie Nebel, Rauch oder Staub, die in vielen Umgebungen auftreten können.

Insgesamt sorgen 3D-Radarsensoren bei Durchgangsanlagen für mehr Sicherheit und eine komfortablere Benutzererfahrung, da sie eine präzisere und zuverlässigere Objekterkennung ermöglichen. Sie sind besonders nützlich in Bereichen mit hoher Passagefrequenz, wie in Einkaufszentren, Flughäfen oder Krankenhäusern.

Weiterhin richtet sich die Erfindung auch auf ein Verfahren zur Ansteuerung der Sperrstruktur oder einer Antriebs- oder Verriegelungseinrichtung derselben. Erfindungsgemäß ist die Sensoreinrichtung als 3D-Radarsensoreinrichtung ausgelegt, so dass durch diese Raumdaten generiert werden, wobei diese Raumdaten einer Mustererkennung unterzogen werden. Zu den erkannten Mustern werden Auslöseszenarien gewählt und die Aktuierung der Sperrstruktur erfolgt nach Maßgabe dieser Auslöseszenarien.

Die 3D-Radar-Technologie der erfindungsgemäßen Durchgangsanlage arbeitet vorzugsweise mit einer Frequenz von 60 GHz und nutzt zur Ansteuerung einer Sperrstruktur Auswertungsergebnisse die aus den mittels der 3D-Radar-Technologie generierten Rauminformationsdaten ggf. KI-basiert abegleitet werden. Durch das erfindungsgemäße Konzept wird ein automatischer, intelligenter, überwachter, situationsabhängiger Personenzutritt durch ein Gate einer Zutrittsanlage ermöglicht. Ein ungewolltes / undefiniertes Öffnen einer Zutrittsanlage (bei Querverkehr, undefinierter Passierungs-Absicht) wird vermieden und die Sicherheit im Schwenkbereich des Sperrorganes bei besonders schutzbedürftigen Personen wird erhöht. Bei den erfindungsgemäßen Durch Durchgangsanlagen (Einzel-/Doppelgates) werden mit 3D-Radarsensorik (60GHz), die Bewegungen und Dynamik erfasst und als Voxel/Raumpunktewolke bereitgestellt. Passierungsabsicht wird mittels Personentracking eingeordnet, sodass die Entscheidung zur situationsabhängigen Öffnung getroffen wird. Durch eine Steuereinrichtung, die diese Daten analysiert und auswertet, wird ein digitales Abbild (Raum-Zwilling) erzeugt und daraus dann eine adaptive Steuerungsentscheidungen ableitet. Die intelligente Ansteuerung der Sperrstruktur basiert auf der Objektform, der Objekt-Geschwindigkeit, der Bewegungsrichtung, der Position im Raum und der Interaktion mehrerer Objekte (z.B. Kind auf Arm, Personengruppe). Die Erfindung ermöglicht eine situationsabhängige Steuerung statt statischer Logik, das erhöht die Sicherheit durch Kollisionsvermeidung und Erkennung unzulässiger Zustände (z.B. Tailgating, Übersteigen/Übergreifen/Unterkriechen). Es ist ein optimierter Durchsatz und ein höherer Komfort möglich, durch frühzeitige und präzise Entscheidungsfindung, Analyse von komplexen Bewegungsmustern in Echtzeit und Reduzierung von Fehlöffnungen-/Schließungen.

Weitere Einzelheiten und Merkmale der Erfindung ergeben sich aus der nachfolgenden Beschreibung in Verbindung mit der Zeichnung. Es zeigt:
- Figur 1: eine vereinfachte Schemadarstellung zur Erläuterung des Aufbaus und der Funktionsweise einer erfindungsgemäßen Durchgangsanlage die sich im Umgebungsbereich eines Bezahlterminals befindet;
- Figur 2: eine Schemadarstellung eines Gates zur Erläuterung des Aufbaus einer Variante mit zwei in vertikaler Richtung abfolgend angeordneten 3D-Radarsensoren mit jeweils in einer horizontalen Schnittebene breiteren Sichtwinkeln als in einer vertikalen Schnittebene;
- Figur 3: eine vereinfachte Schemadarstellung einer erfindungsgemäßen Durchgangsanlage mit einem 3D-Radarsensor mit einem in einer horizontalen Schnittebene schmaleren Sichtwinkel als in einer vertikalen und die Sensoreinrichtung enthaltenden Schnittebene;
- Figur 4: eine Schemadarstellung eines erfindungsgemäßen Systems zur Ansteuerung von Durchgangsanlagen, wobei hier multinodal erhobene und gepoolt bereitgestellte Raumdaten für die Feststellung eines Berechtigungserwerb, die Ansteuerung der Sperrstrukturen und zur Analyse von unzulässigen Passagen herangezogen werden;
- Figur 5: eine Schemadarstellung eines Gates zur Erläuterung des Aufbaus einer Variante mit jeweils zwei seitlich an der Durchgangsanlage abfolgend angeordneten 3D-Radarsensoren zur Erkennung von der vorgesehenen Nutzung, die in irgendeiner Form abweicht, wie insbesondere verbotene Nutzung bzw. Zustände gemäß der Tabelle 1 in Figur 6;
- Figur 6: eine Tabelle zur Veranschaulichung der Schutzfunktionen der Gates nach den Figuren 2, 3 und 5 in einer Nebeneinadnerstellung in welcher insbesondere die Variante nach Figur 5 die umfassendste Überwachungsfunktion bietet.
- Figur 7: eine perspektivische Darstellung einer Zwei-Pfosten Durchgangsanlage mit einer durch zwei Schwenkflügel gebildeten Sperrstruktur;
- Figur 8: eine perspektivische Darstellung des rechten Pfostens der Anlage nach Figur 7, links mit geschlossenem Gehäuse und rechts mit partiell geöffnetem Gehäuse zur Veranschaulichung des Innenaufbaus der Durchgangsanlage;
- Figuren 9a, 9b: Darstellungen zur Veranschaulichung einer Trägerstruktur für die 3D-Radarsensoren wie sie bei der Bauform nach Figur 8 insbesondere im Kopfbereich des Pfostens Anwendung finden kann;
- Figuren 10a, 10b: Darstellungen zur Veranschaulichung einer Trägerstruktur für die 3D-Radarsensoren wie sie bei der Bauform nach Figur 8 insbesondere im Mittenbereich des Pfostens Anwendung finden kann;
- Figur 11: eine perspektivische Darstellung einer Trägerstruktur für mehrere 3D-Radarsensoren die in individuell gewählter Ausrichtung winkeltreu gestapelt gesichert sind;
- Figur 12: eine perspektivische Darstellung der Trägerstruktur nach Figur 11 mit den darauf winkeltreu gestapelt montierten für 3D-Radarsensoren.

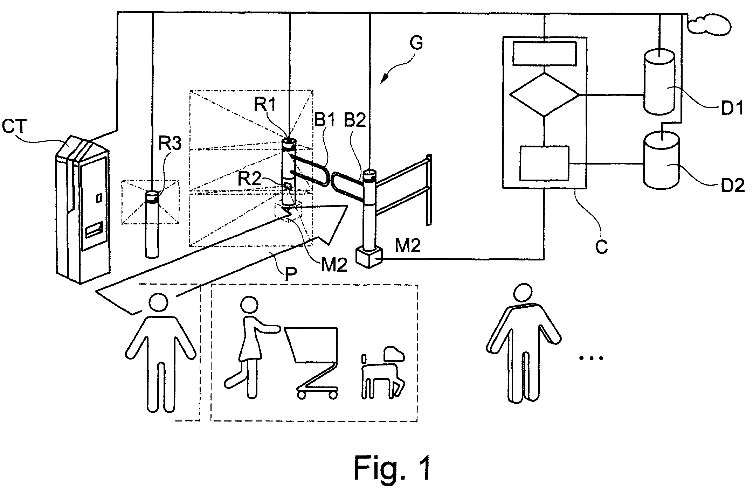

Die Darstellung nach Figur 1 zeigt eine erfindungsgemäße Durchgangsanlage zur Einrichtung eines selektiv sperrbaren Durchgangsweges P, mit einer Sperrstruktur B1, B2, die in eine hier dargestellte Sperrstellung bringbar ist, in welcher der Durchgangsweg P gesperrt ist und die beispielhaft durch Schwenken in eine Freigabestellung bringbar ist, in welcher der Durchgangsweg P freigegeben ist, so dass dieser von einer Person passierbar ist. Die Durchgangsanlage umfasst weiterhin eine Antriebseinrichtung M1, M2 zur Verlagerung der Sperrstruktur B1, B2 aus der Sperrstellung in die Freigabestellung sowie eine Steuereinrichtung C zur Ansteuerung der Antriebseinrichtung M1, M2.

Die erfindungsgemäße Durchgangsanlage umfasst eine Radareinrichtung R1, R2 zur Erfassung einer für die Steuereinrichtung C relevanten Präsenz eines Objektes. Die Radareinrichtung R1, R2 ist derart ausgebildet und konfiguriert, dass diese hinsichtlich der Raumform des Objektes indikative Informationen, insbesondere mit hoher Abtastfrequenz zeitlich und räumlich hochauflösende Echtzeit-Spatialdaten oder Voxel-Daten generiert. Diese Echtzeit-Spatialdaten beschreiben ein die reale Präsenz eines Objektes im Überwachungsbereich dynamisch abbildendes digitales Zwillingssystem. Die Auflösung kann dabei je nach Abstand von der Sensoreinrichtung mit Raumpixeln (Voxeln) erfolgen die eine Quaderkantenlänge von wenigen Millimetern bis etwa 4cm aufweisen oder zumindest eine Auflösung von 4 cm in der Distanz und eine Winkelauflösung 1 Grad in Azimut oder Elevation bei bewegten Objekten. Die Raumpixel-Daten werden derart gespeichert, dass diese Daten für ein größeres Zeitfenster präsent sind, so dass neben den aktuellen Daten auch die Daten für zurückliegende Zeitpunkte vorhanden sind. Dieses Zeitfenster umfasst vorzugsweise wenigstens die Zeitspanne von vier Sekunden, vorzugsweise von mehreren Minuten. Die Abtastrate liegt vorzugsweise bei einer Abtastung/50ms.

Erfindungsgemäß wird dieses digitale Zwillingssystem der Ansteuerung der Sperrstruktur B1, B2 sowie ggf. weiteren Anwendungen zugrunde gelegt. Es ist also nicht oder nicht nur die Erfüllung eines einfachen Schwellwertkriteriums maßgeblich für das Öffnen oder Schließen der Sperrstruktur B1, B2 sondern die Auswertung des Spatialdatensatzes in Echtzeit unter Heranziehung von Auslösemodellen die insbesondere eine Mustererkennung umfassen können. Diese sind im Rahmen der Systemkonfiguration selektierbar und parametrisch abstimmbar. Sie werden vorzugsweise in sog. Templates bereitgestellt und sind über diese Templates ohne Programmierkenntnisse bei Systemkonfiguration in einem Frontend-Modus abstimmbar.

Die Steuereinrichtung C ist derart ausgebildet und konfiguriert, dass die Ansteuerung der Antriebseinrichtung M1, M2 der Raumform des erfassten Objektes und den sich dynamisch ändernden Ortsbelegungsinformationen in dem vom Objekt durchquerten Bahnraum Rechnung trägt. Die Ansteuerung ist softwarebasiert konfigurierbar und trägt spezifizierbaren Qualitäten der temporären örtlichen Präsenz und Bewegung des Objekts in diesem Bahnraum Rechnung.

Die hier dargestellte Durchgangsanlage zeichnet sich weiterhin dadurch aus, dass die Bewegungsgeschwindigkeit des realen Objektes aus der Geschwindigkeit seines digitalen Zwillings errechnet wird. Dieser digitale Zwilling ist in den Echtzeit-Spatialdaten präsent die durch laufende 3D-radarsensorische und geometrisch hinreichend hoch auflösende Abtastung des Überwachungsraumes gewonnen werden.

Anhand der den sensorisch erhobenen Echtzeit-Spatialdaten inhärenten Dynamik, wird die Raumrichtung der Bewegung des Objektes und der zeitliche Verlauf des Objektes im Bereich der Durchgangsanlage modelliert. Aus diesem Modell wird das Aktuierungsszenario hergeleitet und die Aktuierung der Sperrstruktur zeitlich abgestimmt.

Weiterhin wird über die Sensoren R1, R2 die Bewegung des Objektes im Raum erfasst und in einem Zustand der Sperrstruktur in Schließstellung eine unzulässige Überwindung der Sperrstruktur ermittelt.

Der digitale Zwilling des Anwenders beschreibt dessen Raumform und Position mittels entsprechenden Raumdaten. Durch diese Raumdaten wird die Position des Anwenders im Raum und seine Bewegung im Raum beschrieben. Auf Grundlage dieser digitalen Informationen wird in Verbindung mit Aktivierungsmodellen der Öffnungszeitpunkt und/oder der Schließzeitpunkt des Gates ermittelt und die Sperrstruktur B1, B2 entsprechend angesteuert. Hierbei kann ggf. unter Berücksichtigung der Raumform des Objektes (Person / Koffer, Einkaufswagen), des Bahnraumes und des erwarteten Durchlaufs desselben die Öffnungsrichtung der Sperrstruktur festgelegt werden.

Bei dem hier dargestellten Ausführungsbeispiel umfasst die Radareinrichtung R1, R2 wenigstens einen 3D-Radarsensor. Dieser 3D-Radarsensor R1, R2 ist im Nahbereich der Sperrstruktur B1, B2 angeordnet und erfasst einen Raumbereich, der sich über dem Durchgangsweg P erhebt und primär in diesen Durchgangsraum hinein blickt, jedoch neben diesem steht. Der 3D-Radarsensor R1, R2 ist hier insoweit in einem Eckbereich angeordnet, der sich als vertikaler Schnitt aus einer sich entlang eines Randes des Durchgangsweges P erstreckenden Vertikalebene und einer Sperrebene der Sperrstruktur B1 ergibt. Der 3D-Radarsensor R1 ist derart ausgebildet und angeordnet, dass dieser den Torsobereich eines auf dem Durchgangsweges P wandernden Anwenders erfasst. Die Radareinrichtung R1, R2 umfasst mehrere Radarsensoren R1, R2. Diese Radarsensoren R1, R2 scannen unterschiedliche Raumbereiche oberhalb des Durchgangsweges P. Die Radareinrichtung R1, R2 umfasst hier insoweit einen oberen Radarsensor R1 und einen unteren Radarsensor R2. Der untere Radarsensor R2 ist vom Boden nach oben um etwa 30cm beabstandet, der obere Radarsensor R1 um ca. 90cm.

Der obere Radarsensor R2 erfasst den Bahnraum der Sperrstruktur B1 und die insoweit erhobenen Sensordaten werden dazu herangezogen ein Feedback zur Position der Sperrstruktur B1 zu generieren. Die Sensordaten werden auch über die dem Sperrstruktur B1 zuordbaren Objektdaten kalibriert. Hierzu wird die Position der Sperrstruktur B1 in bestimmten Winkelstellungen die über die Antriebseinrichtung M2 abrufbar sind errechnet und diese Raumdaten werden mit den Sensordaten des 3D-Radarsensors R1 abgeglichen.

Die Durchgangsanlage G befindet sich hier beispielhaft in Nachbarschaft zu einem Bezahlterminal CT. Im Bereich dieses Bezahlterminals CT ist ebenfalls eine 3D-Radarsensoreinrichtung R3 angeordnet. Ein an diesem Bezahlterminal operierender Anwender wird sensortechnisch in einer Weise 3D-gescannt, die hinsichtlich der Raumdatenqualität der Abtastung im Gatebereich G über den oberen 3D-Radarsensor R1 entspricht. Vorzugsweise werden im gesamten System baugleiche 3D-Radarsensoren verwendet. Die von den 3D-Radarsensoren R1, R2, R3 erhobenen Daten werden fortlaufend in einen Datenpool D1 eingelesen. Auch die den Bezahlvorgang dokumentierenden Daten werden in einen Datenpool D2 eingelesen. Die so gewonnen Raumdaten werden unterschiedlichen Analyseprozeduren zur Verfügung gestellt die zum Teil Mustererkennungsalgorithmen enthalten. Bei Erfüllung jeweils durch diese Analyseprozeduren generierter Wahrheitswerte wird eine Aktuierung der entsprechenden Sperrstruktur veranlasst. Im Rahmen der Bewegung der Sperrstruktur B1, B2 wird unter weiterer Auswertung der laufend im wesentlichen in Echtzeit in den Datenpool D1 aktualisiert eingelesenen Raumdaten eine Kollisionsvermeidung zwischen erkannten Objekten und der aktuierten Sperrstruktur B1, B2 absolviert. Die Kollisionsvermeidung kann im Rahmen des Öffnungsmodus auch über eine lokale Steuerung des Gates abgewickelt werden. Die Verarbeitung der mittels der 3D-Radareinrichtung R1, R2 des jeweiligen Gates gewonnen Daten erfolgt über eine Steuereinrichtung C. Die 3D-Radareinrichtung R1 kann zunächst in einem Standby-Modus verweilen. Durch einen einfachen Näherungssensor der den Anfangsbereich des Gates erfasst, kann ein Aktivierungssignal generiert werden, das zur Folge hat, dass der 3D-Radarsensor aktiv wird und nunmehr der Raumbereich oberhalb des Laufwegs P hochauflösend und mit hoher Abtastrate (1Scan/50ms) abtastet und hierbei eine Raumpunktematrix mit Angaben befüllt ob dort Festkörpermaterie oder freier Luftraum vorliegt. Durch diese Abtastung entsteht eine Matrix die ein entsprechend der räumlichen Auflösung des Radars aussagefähiges Abbild der Anwesenheit von Festkörpermaterie im Observationsbereich beschreibt.

Vorzugsweise verfügt jedes Gate über eine derartige lokale Steuereinrichtung, welche in Verbindung mit den Daten die durch die 3D-Radarsensoreinrichtung erhoben werden grundsätzlich in der Lage ist autonom eine Objekterkennung, eine Ansteuerung der Sperrstruktur und einen Kollisionsvermeidungsmodus, sowie einen Deceive-Modus abzuarbeiten. Diese lokale Steuereinrichtung kann mit der 3D-Sensoreinrichtung zu einer Baugruppe zusammengefasst sein und wie hier dargestellt in eine Pfosten oder Rahmenstruktur des Gates G oder eine anderweitige einen entsprechenden Bauraum bereitstellende Struktur des Gates eingebunden sein. Die Daten der 3D-Sensoreinrichtung R1, R2 werden parallel zum Betrieb des Gates eben dem genannten Datenpool D1 zur Verfügung gestellt. In Verbindung mit den Daten im Pool D2 zum Berechtigungserwerb wird unter Heranziehung weiterer Auswertungsmodelle eine Gesamtautorisierung des Anwenders zum Betreten oder Verlassen des durch das Gate gesteuerten Bereiches ermittelt. Die über die 3D-Radarsensoreinrichutng erhobenen Daten werden damit sowohl zur Autorisierungsprüfung als auch zur Operation des Gates G herangezogen.

Für die Auswertung der Daten in den Datenpools D1, D2 werden Auswertungsmodelle herangezogen die vom Systembetreiber auf Adminebene selektiert und konfiguriert werden. Diese Auswertungsmodelle können die Erkennung von Objekten, Personen, Personen/Objektgruppen, "Trossen" also zusammengehörigen Personen und Objekten und weitere Charakteristika derselben beinhalten. Es kann erkannt werden, ob eine Person oder zwei Personen neben / hintereinander passieren. Es kann insbesondere ermittelt werden, welche Personen und Objekte jeweils separate Berechtigungserwerbe getätigt haben und das Gate kann durch entsprechende Ansteuerung der Sperrstruktur diese Personen und Objekte im Bereich des Durchgangsweges erkennen und separieren, d.h. relativ feinfühlig aktiv in den Zwischenbereich zwischen Personen oder Objekten aktiv einschwenken.

Erfindungsgemäß ist die 3D-Radarsensoreinrichtung derart ausgebildet und angeordnet, dass der von dieser erfasste Raumbereich eine Auslöserelevante Raumzone oberhalb des Laufweges und zugleich den Nahbereich der Sperrstruktur erfasst und in Verbindung mit den in jenem Nahbereich erfassten Ereignissen ein Erkennungsprozess abgewickelt wird, durch welchen eine unautorisierte Passage der Durchgangsanlage erkennbar wird.

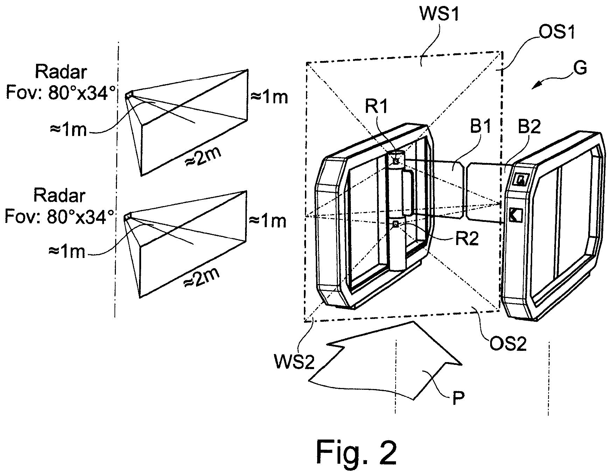

Die Darstellung nach Figur 2 veranschaulicht den Aufbau eines erfindungsgemäßen Gates G, das zwei 3D-Radarsensoren R1, R2 umfasst. Diese 3D-Radarsensoren sind vertikal abfolgend am seitlichen Randbereich des durch das Gate G führenden Laufweges P angeordnet. Die 3D-Radarsensoren blicken vom Randbereich des Laufweges P in diesen hinein. Die Observationsbereiche der beiden Radarsensoren R1, R2 schließen aneinander an und überlappen sich auch leicht. Beide Radarsensoren R1, R2 observieren Räume OS1, OS2, die sich als Pyramiden oder Keulen beschreiben lassen mit einer im wesentlichen horizontalen Zentralachse. Diese Pyramiden oder Keulen sind "abgeflacht" und sind zudem über diese Flachseiten benachbart. Eine typische Observationspyramide hat in Blickrichtung eine Tiefe von etwa 1 bis 1, 5 m und observiert am Ende ihrer Blicktiefe ein Fenster WS1, WS2 das hier in etwa Abmessungen von 2m in der Horizontalen und 1m in der Vertikalen hat. Ein Anwender der den Laufweg P entlang wandert, durchquert beide aneinander anstoßende Fenster WS1, WS2 und im Rahmen der Durchquerung dieser Fenster und dem anschließenden befindlich sein in den jeweiligen von den Sensoren R1, R2 abgetasteten Raumbereichen OS1, OS2 werden fortlaufend mit hoher Auflösung und Abtastfrequenz Spatial-Daten zur Raumbelegung durch den Anwender und ggf. mitgeführten Objekten erhoben. Diese Raumdaten werden wie oben beschrieben durch Auswertungsmodelle analysiert und in Verbindung mit den hierbei gewonnenen Auswertungsergebnissen wird die Ansteuerung der die Sperrstrukturen B1, B2 bewegenden Antriebseinrichtung abgewickelt. Die Auswertungsmodelle umfassen die Objekterkennung und Bewegungsmuster der erkannten Objekte.

Zumindest der oberer 3D-Radarsensor wickelt eine Raumobservation ab, durch welche ein Datensatz generiert wird, der letztlich Raumpunkte und dabei wiederum eine Gesamtheit von Raumelementen beschreibt die entweder leer sind oder von einer Struktur erfüllt sind. Zu alldiesen Raumpunkten ist sind Zeitwerte hinterlegt. Durch die 3D-Radarsensoren entsteht letztlich eine Punktewolke die als Echtzeitdarstellung den von Objekten eingenommenen Raum im allgemein observierten Raum beschreibt. Die 3D-Radarsensoren können so ausgelegt sein, dass diese eine Struktur erkennen und deren Position im Observationsraum beschreiben können, jedoch zugleich auch durch diese Struktur hindurchblicken und auch die hinteren Strukturgrenzen erkennen oder auch durch Zwischenräume getrennte Strukturen.

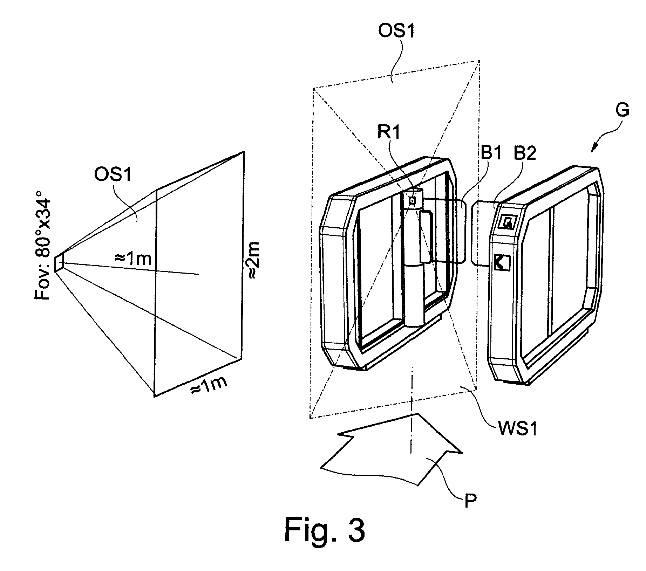

Die Darstellung nach Figur 3 zeigt eine Variante eines erfindungsgemäßen Gates G bei welchem ein einziger 3D-Radarsensor R1 im Bereich der oberen Kante der durch die Sperrstruktur B1, B2 definierten Sperre angeordnet ist. Der 3D-Radarsensor R1 generiert einen Observationsbereich OS1 der vom seitlichen Randbereich des Laufweges P in den Raum oberhalb dieses Laufweges P, d.h. den von einer Person potentiell zu durchschreitenden Durchgangsraum hineinblickt. Der Observationsbereich OS1 lässt sich wiederum als pyramidaler oder keulenartiger Raum beschreiben mit einer primär horizontal ausgerichteten Zentralachse. Der Observationsbereich OS1 ist beidseitig abgeflacht und bildet ein Rechteckfenster WS1 das in vertikaler Richtung eine Höhe aufweist die höher ist als das in horizontaler Richtung sich darstellende Breitenmaß dieses Fensters WS1. Auch hier befindet sich der 3D-Radarsensor R1 auf dem Höhenniveau der Oberkante der durch die Sperrstruktur B1, B2 definierten Sperre. Das Observationsfenster WS1 hat Abmessungen von etwa 2m in vertikaler Richtung und 1m in horizontaler Richtung. Das Observationsfenster steht auf dem Laufweg in der Art einer virtuellen Türe. Beim Durchqueren dieses Observationsfensters WS1 entstehen die Raumdaten zum Anwender oder Objekt und im Rahmen des Befindlichseins des Objekts oder Anwenders im Observationsraum OS1 werden in diesem Raum weitere Echtzeit Raumdaten erhoben. Die Raumdaten zur Historie sind für ein definiertes Analysezeitfenster ebenfalls noch greifbar.

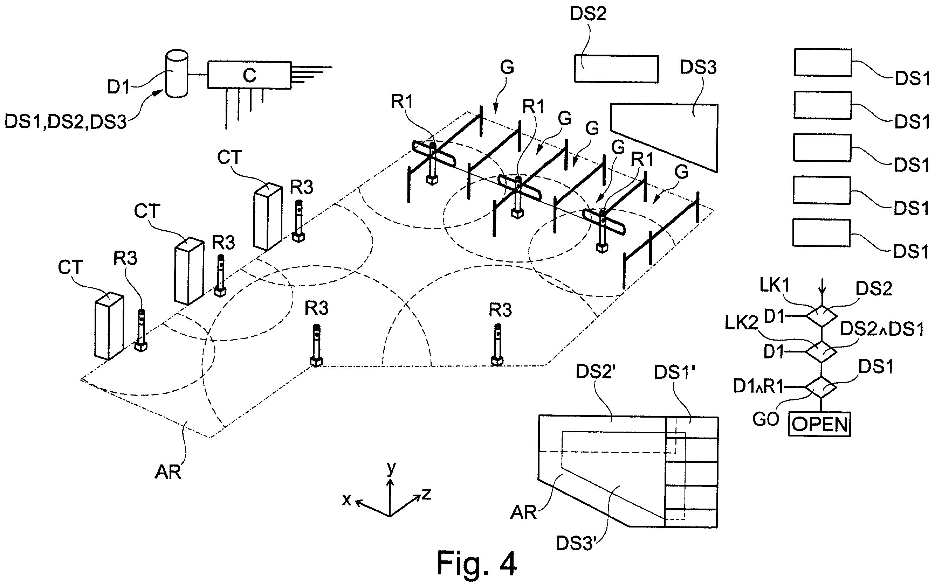

Die Darstellung nach Figur 4 veranschaulicht die Konzeption eines Systems das mehrere Durchgangsanlagen G der oben beschrieben Bauart, sowie Bezahlterminals CT und diskrete 3D-Radarsensoren R3 umfasst. Durch die 3D-Radarsensoren R1, R3 wird ein Aufenthaltsbereich AR observiert und es werden die 3D-Raumdaten darin präsenter Personen und Objekte aufgezeichnet und als Echtzeitdaten in einem Datenpool D1 abgelegt. Die in dem Pool D1 abgelegten Daten werden einer Rechnereinrichtung C zur Abarbeitung von Auswertungsprozeduren zur Verfügung gestellt. Diese Auswertungsprozeduren verwenden Untergruppen DS1, DS2, DS3 dieser Daten zur Ermittlung bestimmter Wahrheitswerte. Die jeweils generierten Wahrheitswerte werden bei der Ansteuerung der Sperrstrukturen der Gates G berücksichtigt. Bestimmte Prozeduren werden im Bereich der Gates G autonom und mit den durch die dortige jeweilige 3D-Sensoreinrichtung bereitstehenden Spatial-Daten DS1 in der sensoreigenen Rechnereinrichtung abgearbeitet. Die Datensätze DS1 sind Echtzeit Raumdaten die im jeweiligen Gate G erfasst werden. Diese Daten werden für die Ansteuerung der Öffnung, des Schließens und der Kollisionsvermeidung herangezogen. Sie werden auch zu einer Verprobung des Berechtigungserwerbs herangezogen und zwar in Verbindungmit Raumdaten DS2 und Weginformationsdaten DS3. Die Weginformationsdaten DS3 werden in Verbindung mit den zusätzlichen Einzelsensoren R3 erhoben.

Durch die erfindungsgemäß bereitgestellten Echtzeit-3D-Raumdaten wird die Durchgangsautorisierung und die Ansteuerung der Sperrstrukturen der Gates G abgewickelt. Die Systemkonfiguration erfolgt unter Bereitstellung von Templates softwarebasiert. Die 3D-Daten am Gate G können autonome Abläufe koordinieren, durch die weiteren zusätzlich erhoben 3D-Daten erfolgt eine Laufwegsanalyse und die Zuordnung des Berechtigungserwerbs.

Zu den Ereignissen im Raumbereich oberhalb der Bodenfläche des Aufenthaltsbereichs AR, sowie insbesondere im Bereich der Gates G wird durch Raumdatenerfassung ein digitales Echtzeit-Zwillingssystem generiert das die Anwesenheit von Personen und Objekten als virtuelles Echtzeit 3D-Modell abbildet. Die Ansteuerung der Gates G erfolgt in Verbindung mit der Erkennung von Szenarien und Mustern in dem Zwillingssystem und das Timing der Ansteuerung der Sperrstrukturen der Gates G erfolgt ebenfalls unter Rückgriffnahme auf die Echtzeit-Raumdaten und die Ergebnisse der Erkennung der Szenarien und Muster.

Die Funktionsweise des Systems nach Figur 4 lässt sich wie folgt beschreiben: Ein Kunde betritt den Erfassungsbereich AR. Sein Eintreten in den Erfassungsbereich AR wird über die dem Aufenthaltsort des Kunden benachbarten Sensoren R3 erkannt. Die Sensoren liefern ein hochauflösendes 3D-Abbild des Kunden im Erfassungsbereich. Der Kunde bewegt sich zu einem Bezahlterminal CT und wickelt dort einen Bezahlvorgang ab. Im Bereich des Bezahlterminals CT wird der Bezahlvorgang verbucht und die entsprechenden Daten an einen Datenpool übergeben. Durch laufende Aktivität der in diesem Erfassungsbereich AR präsenten Sensoren R3 kann aus den in den Datenpool eingespeisten Raumdaten der Laufweg des Kunden erkannt werden. Erkennt eine Auswerteprozedur die Erfüllung eines Kontinuitätskriteriums LK1 hinsichtlich des Laufweges von einem Bezahlterminal CT zu einem Gate G so stellt dies eine Entsprechung eines ersten Freigabekriteriums dar. Besteht dann am Gate G eine Übereinstimmung zwischen den am Gate G mittels der 3D-Radarsensoren determinierten Raumform des Kunden mit der am Bezahlterminal CT determinierten Raumform, so wird in der Rechnereinrichtung C ein zweites Freigabekriterium LK2 als erfüllt angesehen. An jenem Gate G an welchem sich der Kunde nun befindet wird ein Öffnungsmodus aktiviert. Dieser Öffnungsmodus errechnet einen optimalen Öffnungszeitpunkt für die Öffnung des Gates unter Berücksichtigung des Belegungszustandes im Bereich hinter der Sperrstruktur des Gates. Über den 3D-Radarsensor wird der Zugang des Kunden zum Gate weiter räumlich hochauflösend erfasst. Die so weiter erfassten Daten werden einer Mustererkennung unterzogen und anhand der erkannten Muster wird endgültig die Öffnung des Gates veranlasst.

Aus den in dem Datenpool hinterlegten Raumdaten können für bestimmte Abfrageansätze bestimmte Datenuntermengen ausgelesen werden. Für das Laufwegskriterium LK1 können beispielsweise die Daten DS2, DS3 verwendet werden die den Räumen oberhalb der Zonen DS2' und DS3', des Erfassungsbereiches AR mit hoher Taktfrequenz sukzessive erhoben werden. Für das Matchkriterium LK2 werden die Daten DS2 und DS1 verwendet. Für die Mustererkennung GO und Abwicklung der mechanischen Prozedur des Öffnens des Gates bei gegebener Autorisierung werden die Daten DS1 verwendet und zwar unmittelbar am Gate ohne Abfrage des Datenpools D1.

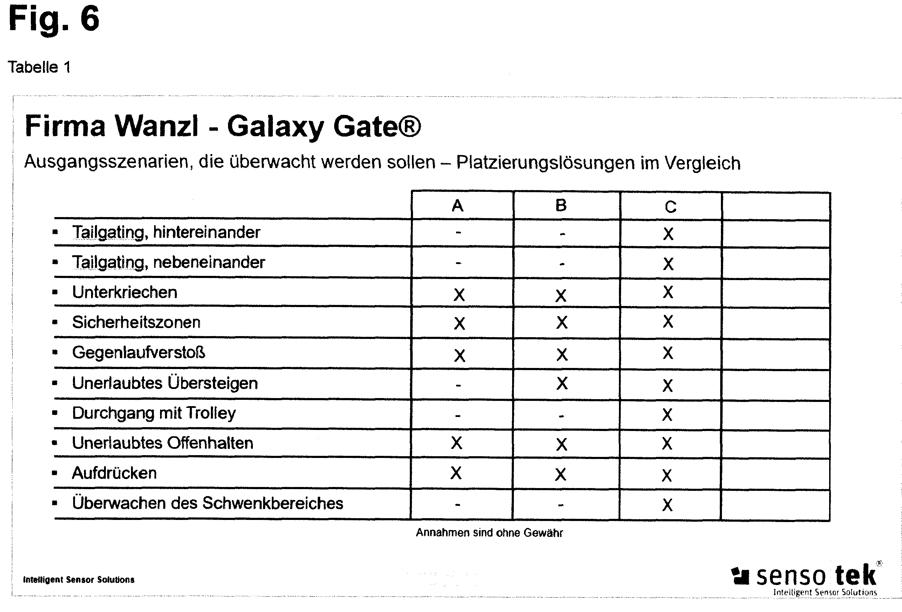

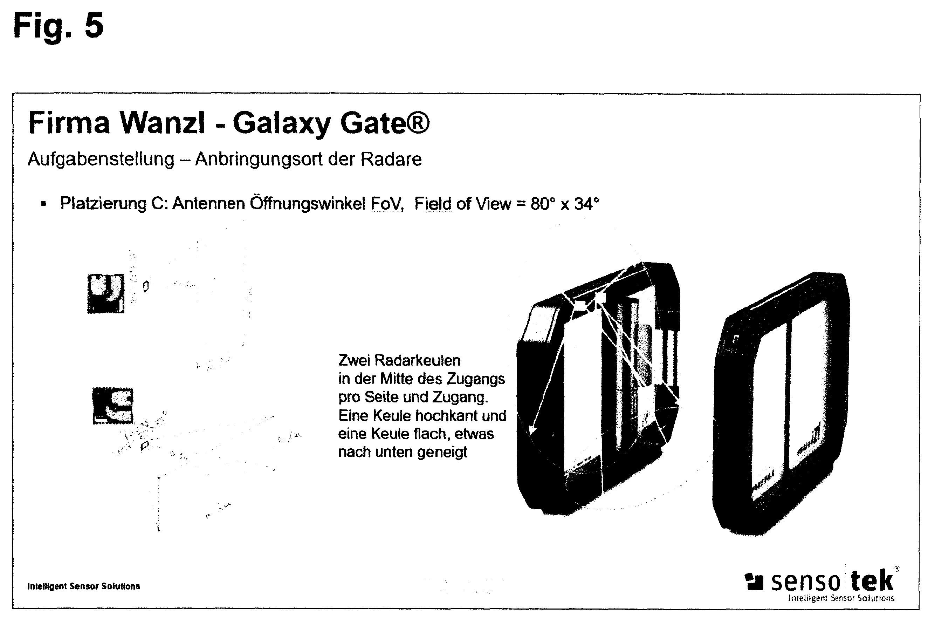

Die Darstellung nach Figur 5 veranschaulicht den Aufbau einer weiteren Variante einer erfindungsgemäßen Durchgangsanlage mit jeweils zwei seitlich an der Durchgangsanlage abfolgend angeordneten 3D-Radarsensoren zur Erkennung der Nutzung und Abweichungen von den als zulässig klassifizierten Nutzungen, wie insbesondere verbotenen Nutzungen bzw. Zuständen gemäß der Tabelle 1 in Figur 6.

Die Durchgangsanlage umfasst ein linkes und ein rechtes Paar von 3D-Radarsensoren, die unter geringem Abstand in Horizontalrichtung auf im wesentlichen dem gleichen Vertikalniveau angeordnet sind. Jeder dieser 3D-Radarsensoren generiert einen Quaderpyramidalen Erfassungsraum der im Orthogonalschnitt zur Zentralachse einen rechteckförmigen Querschnitt aufweist. Die 3D-Radarsensoren können im wesentlichen baugleich ausgeführt sein, sie sind jedoch derart "zueinander rotiert und angestellt" angeordnet, dass einer der 3D-Radarsensoren von oben her leicht nach unten geneigt blickt und dabei die Flachseite der Detektionsraumpyramide horizontal ausgerichtet ist. Der zweite 3D-Radarsensor ist so montiert, dass dessen Detektionsraumpyramide auf Geländerhöhe von der Seite her schräg in den Durchgangsbereich hineinblickt, wobei die Flachseiten der Pyramide jedoch vertikal ausgerichtet sind. Der erste 3D-Radarsensor blickt somit flach von oben her nach unten und detektiert den Durchgangsbereich von der Seite her, jedoch praktisch unter dem Höhenniveau auf welchem der Sensor montiert ist. Der zweite 3D-Radarsensor scannt mit nahezu waagrechter Zentralachse der Detektionspyramide den Durchgangsbereich auch oberhalb seines Montageniveaus. Obgleich nicht weiter dargestellt, ist in die Durchgangsanlage auch in die in dieser Darstellung rechte Geländerstruktur auf dem gleichen Höhenniveau eine Doppel-3D-Radarsensoreinsirchtung eingebunden, die im Aufbau der vorangehend beschriebenen Bauform entspricht und praktisch nur spiegelsymmetrisch - jetzt von der rechten Seite her in den Durchgangsbereich hinein blickt.

Die beiden 3D-Radarsensoren dieser Durchgangsanlage die dann vertikal ausgerichtete Detektionsraumpyramiden aufweisen können so ausgerichtet sein, dass die vertikalen Flachseiten dieser Detektionsraumpyramiden im wesentlichen mit den Vertikalebenen fluchten die die jeweilige Geländereinrichtun erfassen und in deren horizontale Längsrichtung verlaufen. In der Darstellung nach Figur 5 erstecken sich damit die äußeren Flachseiten der linken und rechten Hochkantpyramiden im wesentlichen parallel zu den Glasplatten im Geländer und bilden eine über diese Glasplatten vertikal nach oben hinausgehende Grenzfläche durch welche ein Objektdurchgang erkennbar ist.

Die Darstellung nach Figur 6 zeigt eine Tabelle in welcher unterschiedliche Arten einer unzulässigen Nutzung der Durchgangsanlage aufgeführt sind. Mit den Sensorkonfigurationen der Ausführungsformen nach den Figuren 2, 3 und 5 können die in den Spalten markierten Funktionen realisiert werden.

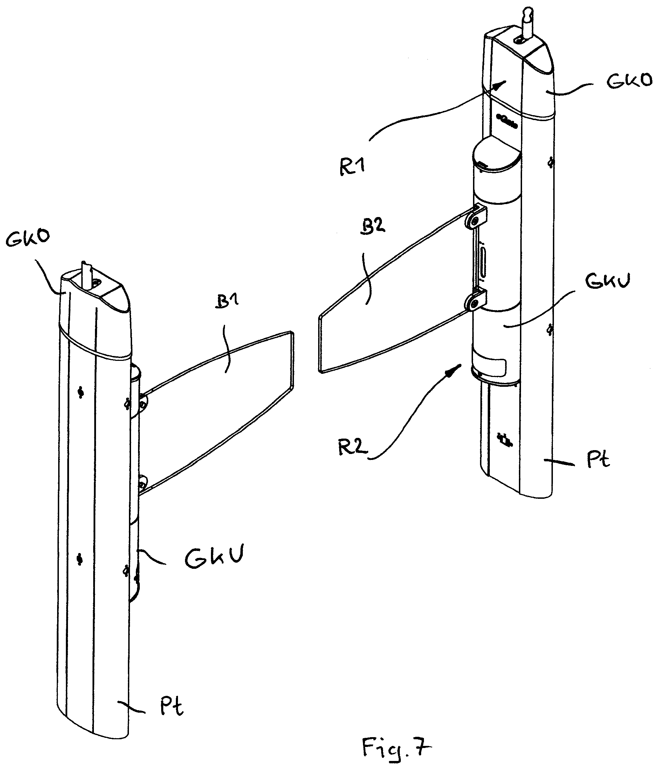

Die Darstellung nach Figur 7 veranschaulicht den Aufbau einer erfindungsgemäßen Durchgangsanlage in Form einer Doppel-Pfostenstruktur die jeweils schwenkbar verlagerbare Sperrorgane B1, B2 trägt. Die Pfosten Pt tragen in ihren oberen Endbereichen jeweils Gehäusekappen GKO, die aus einem radar-permeablen Werkstoff, insbesondere einem Kunststoffmaterial gefertigt sind. Im Innenbereich dieser Gehäusekappen GKO befindet sich jeweils eine Gruppe von 3D-Radarsensoren, wobei diese Sensoren auf eine geforderte Detektionsqualität hin konfiguriert montiert sind. Hierauf wird in Verbindung mit den nachfolgenden Figuren noch vertieft eingegangen werden. Die 3D-Radarsensoren R1 befinden sich auf einem Höhenniveau oberhalb der Sperrorgane B1, B2 und erfassen in überlappender Weise den Raumbereich oberhalb der Sperrorgane B1, B2, sowie auch den Schenkbereich dieser Sperrorgane B1, B2, d.h. jenen Raumbereich, den die Sperrorgane B1, B2 im Rahmen ihrer Verlagerung zur Erlangung der Freigabestellung oder beim Zurückschwenken, zur Erlangung der Sperrstellung durchqueren.

Die Pfostenstruktur Pt fungiert weiterhin auch als Träger für untere 3D-Radarsensoren R2. Diese befinden sich ebenfalls im Inneren von Gehäusekappen GKU, die aus einem radarpermeablen Material gefertigt sind. Diese Kappen GKU sind an die jeweilige Pfostenstruktur PT angebunden.

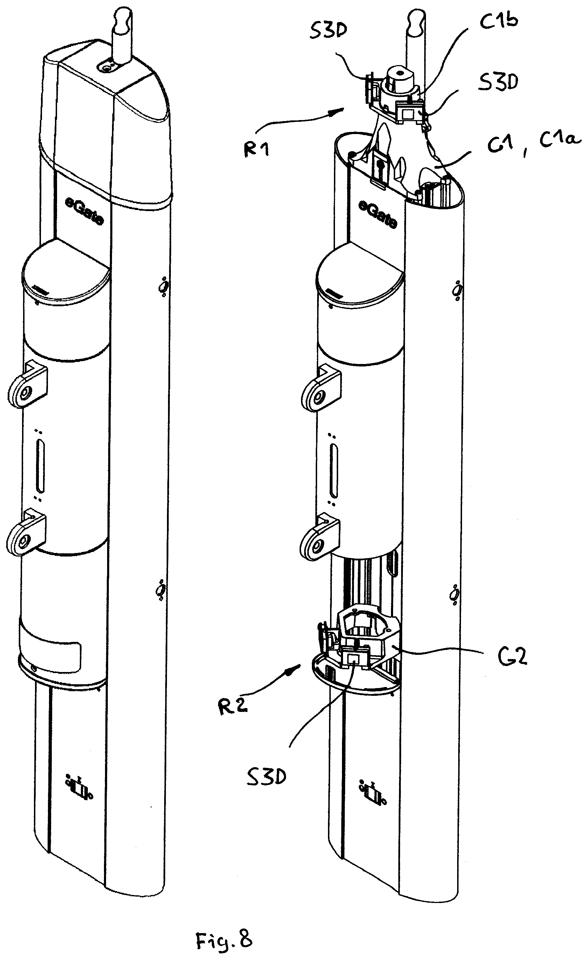

Wie aus der Darstellung nach Figur 8 ersichtlich sind unterhalb der hier abgenommenen Gehäusekappen GKO, GKU Trägerstrukturen C1, C2 in die Pfostenstrukturen Pt eingebunden. Diese Trägerstrukturen C1, C2 ermöglichen die Montage der eigentlichen 3D-Radarsensoren S3D in einer geforderten Position und räumlichen Ausrichtung. Die obere Trägerstruktur C1 ist mehrteilig ausgebildet und als Baukasten-System bereitgestellt. Sie besteht aus einer Grundstruktur C1a und wenigstens einem daran angesetzten Unterträger C1b. Die Trägerstrukturen C1, C2 sind derart ausgebildet, dass sich bereits im Wege der Montage der 3D-Radarsensoren S3D eine geforderte räumliche Positionierung und Detektions-Orientierung mit hoher Wiederholgenauigkeit ergibt.

Die Trägerstrukturen C1, C2 sind derart ausgebildet, dass diese die Basis für verschiedene Detektions-Konfigurationen bieten. So können über die Trägerstrukturen C1, C2 Basiskonfigurationen mit wenigen 3D-Radarsensoren realisiert werden, oder auch komplexe Konfigurationen mit einer Vielzahl an 3D-Radarsensoren S3D deren Detektionsräume sich erheblich überlappen.

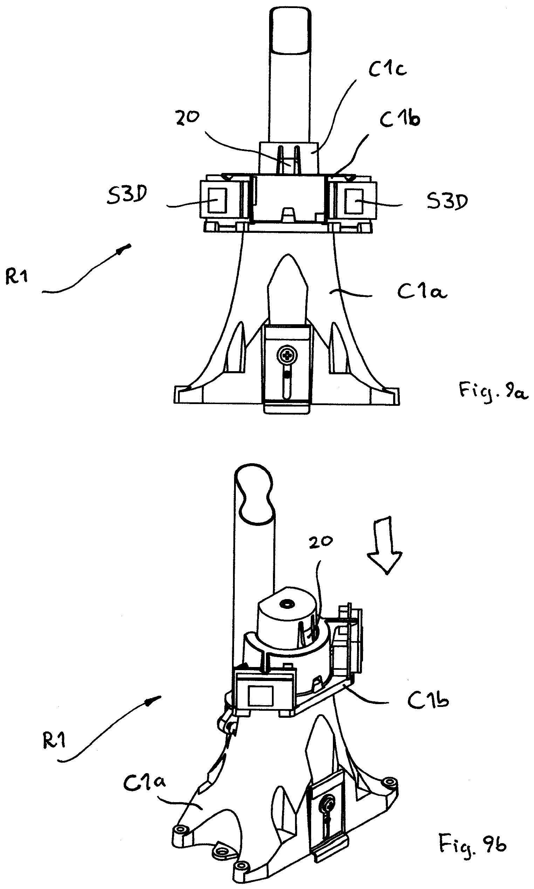

Die Darstellung nach Figur 9 veranschaulicht den Aufbau der bei der Durchgangsanlage nach Figur 8 eingesetzten oberen Trägerstruktur C1. Diese umfasst die Grundstruktur C1a und einen darauf aufgesteckten Unterträger C1b. Der Unterträger sitzt hierbei auf einem Kernzapfen C1c der Grundstruktur C1a, Die Geometrie des Kernzapfens C1c und des Unterträgers C1b sind derart komplementär aufeinander abgestimmt, dass der Unterträger C1b in einer definierten Winkelposition auf der Grundstruktur C1a arretierbar ist. Die Arretierung erfolgt hier durch eine Rastklaue 20 die bei Erreichen der Aufsteckendposition des Unterträgers C1b auf dem Kernzapfen C1c den Aufschubweg sperrt und den Unterträger C1b auf der Grundstruktur C1a sichert.

Die Darstellung nach Figur 9b zeigt in Form einer perspektivischen Darstellung die Grundstruktur C1a mit darauf montiertem Unterträger C1b. Der Unterträger C1b ist aus einem Kunststoffmaterial gefertigt und fungiert als Baugruppenbasis auf welcher die 3D-Radarsensoren S3D zusammen mit der lokalen elektronischen Schaltungsbaugruppe montiert sind. Die Rastklaue 20 kann durch leichten Fingerdruck werkzeuglos in eine Freigabestellung gedrängt werden in welcher der Unterträger C1b bedarfsweise von der Grundstruktur C1a abgezogen werden kann. Der hier beschriebene Aufbau ermöglicht es, die Durchgangsanlage zunächst noch ohne 3D-Radarsensoren zu montieren und das System nach Abschluss der bauseitigen mechanischen Montagearbeiten final und bedarfsgerecht mit der Sensorik zu bestücken. Diese Bestückung kann dann durch Aufstecken der Unterträger auf die vorbereiteten Grundstrukturen C1a erfolgen. Für die Sensorik ist im jeweiligen Pfosten vorzugsweise eine Verkabelung vorbereitet, die wiederum vorzugsweise über standardisierte Steckverbindungen an die lokale Schaltungsbaugruppe des nunmehr aufgesteckten und die Sensorik tragenden Unterträgers C1b ansteckbar ist. Für diese Verkabelung sind Kanäle in der Pfostenstruktur Pt vorbereitet. Der Unterträger kann Steckerbuchsen oder elektrische Steckerorgane tragen, so dass die Herbeiführung des elektrischen Anschlusses ohne filigrane Arbeiten an den Platinen oder ohne mechanische Belastung sensibler Strukturen erfolgt.

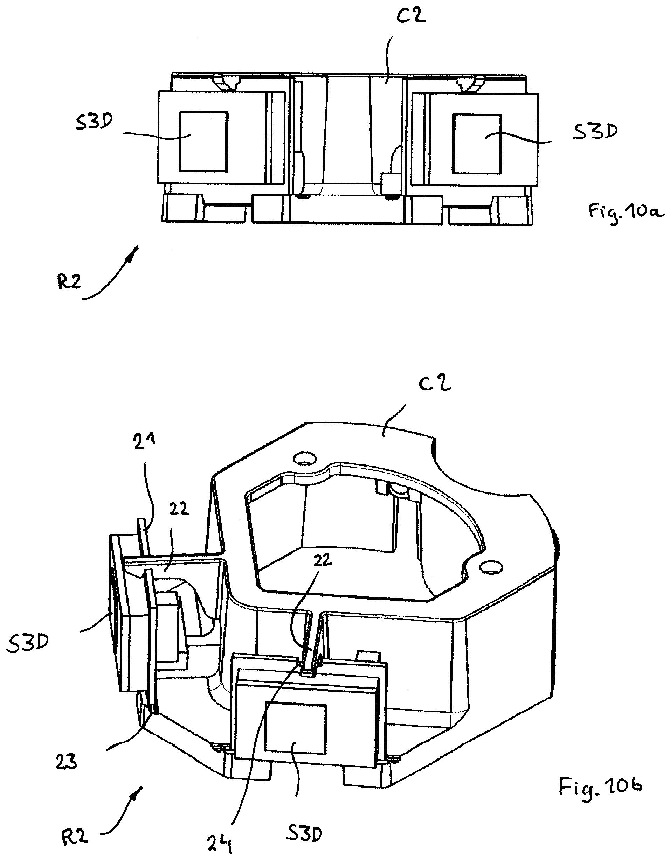

Die Darstellungen nach den Figuren 10a und 10b veranschaulichen den Aufbau einer Trägerstruktur C2, die sich insbesondere für die Einbindung der unteren Sensorbaugruppe in die Pfostenstruktur Pt eignet. Diese Trägerstruktur C2 fungiert sowohl als Träger für die 3d-Radarsensoren S3D sowie auch als mechanisches Bindeglied, das an der Pfostenstruktur Pt montierbar ist. Diese Trägerstruktur C2 ist hier mit zwei 3D-Radarsensoren S3D bestückt, die in der hier erkennbaren Ausrichtung zueinander fixiert sind und den Raumbereich unterhalb der Sperrstrukturen B1, B2 erfassen. Die Radarsensoren S3D befinden sich auf Platinen 21, diese sind unter temporärer elastischer Verformung von Halteklauen 22 in die Trägerstruktur C2 lagegesichert einklipsbar. Ein unterer Randkantenbereich der Platine 21 sitzt hierbei in einer Kerbe 23 und die Halteklaue 22 taucht mit geringem Seitenspiel von oben her in eine Kerbe 24 der Platine 21 ein. Durch diesen Aufbau ergibt sich eine sichere und hinsichtlich Position und Winkeltreue mit hoher Zuverlässigkeit reproduzierbare Montage der Sensoren S3D an der Trägerstruktur C2 und damit auch an dem jeweiligen Pfosten Pt.

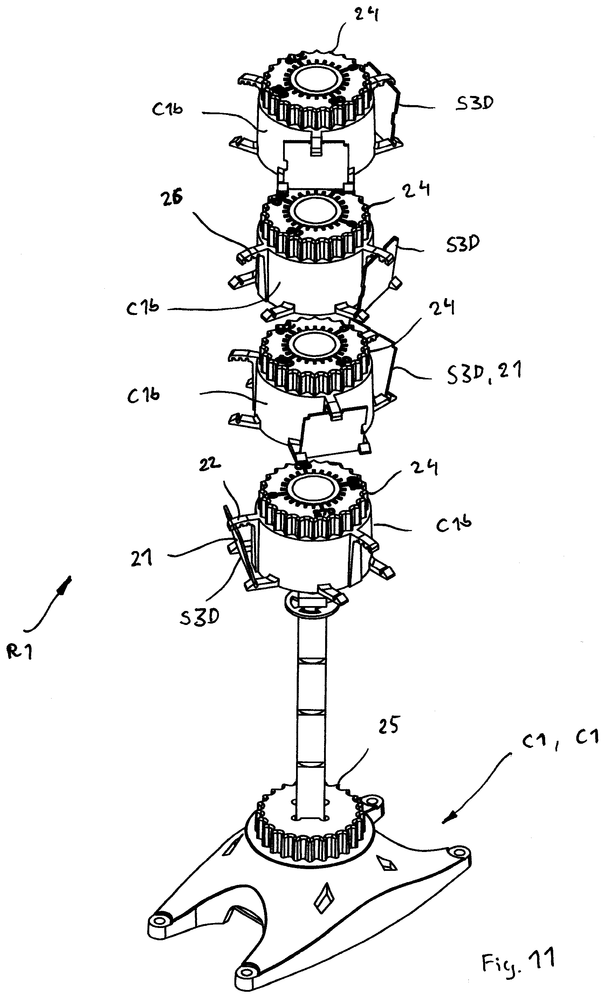

Die Darstellung nach Figur 11 veranschaulicht den Aufbau einer Trägerstruktur C1 wie sie insbesondere für die Erfassung des oberen Torso- und Gesichtsbereiches eines die Durchgangsanlage passierenden Anwenders verwendet werden kann. Die Trägerstruktur C1 ist derart aufgebaut, dass diese die Montage mehrerer 3D-Radarsensoren S3D in unterschiedlichster und reproduzierbar erreichbarer räumlicher Position und Ausrichtung ermöglicht. Die erfindungsgemäße Anordnung umfasst die Grundstruktur C1a und mehrere Unterträger C1b. Die Unterträger C1b sind miteinander winkeltreu in bedarfsgerecht gewählten Winkelstellungen koppelbar. Die Unterträger C1b sind zudem bedarfsgerecht gewählt winkeltreu auf die Grundstruktur C1a aufsetzbar. Der insgesamt gebildete Radarmodulträger besteht aus einzelnen Modulhaltern, die in erforderlicher Anzahl in gewünschter Ausrichtung und Kombination zu einem Turm zusammengesteckt werden können. Die Winkelstufung beträgt hier beispielsweise 15°, d.h. die Modulhalter sind in Winkelstufungen von 15° reproduzierbar zusammensteckbar. Die so gebildeten Gruppen können zunächst vorkonfektioniert werden und dann im Rahmen der Endmontage auf die jeweils säulenseitig montierte Grundstruktur C1a aufgesetzt werden. Am jeweiligen Unterträger C1b können meherere Platinen 21 in wiederum wählbarer Ausrichtung

Die winkeltreue Koppelung der Unterträger C1b miteinander erfolgt über komplementäre Steckverzahnungen 24. An der Grundstruktur ist ebenfalls eine zum untersten Unterträger C1b komplementäre Steckverzahnung 25 ausgebildet. Mit der derart vorbereiteten Hardware kann eine Vielzahl an 3D-Radarsensoren S3D in geforderten Positionen und Ausrichtungen in die Durchgangsanlage eingebunden werden.

Der jeweilige Unterträger C1b ist derart ausgebildet, dass diese wahlweise mit mehreren 3D-Radarsensoren bestückt werden kann, wobei hier durch Auswahl der Haltekerbe 26 der jeweiligen Halteklaue 22 bestimmte Vertikalneigungen der Platinen 21 gewählt werden können.

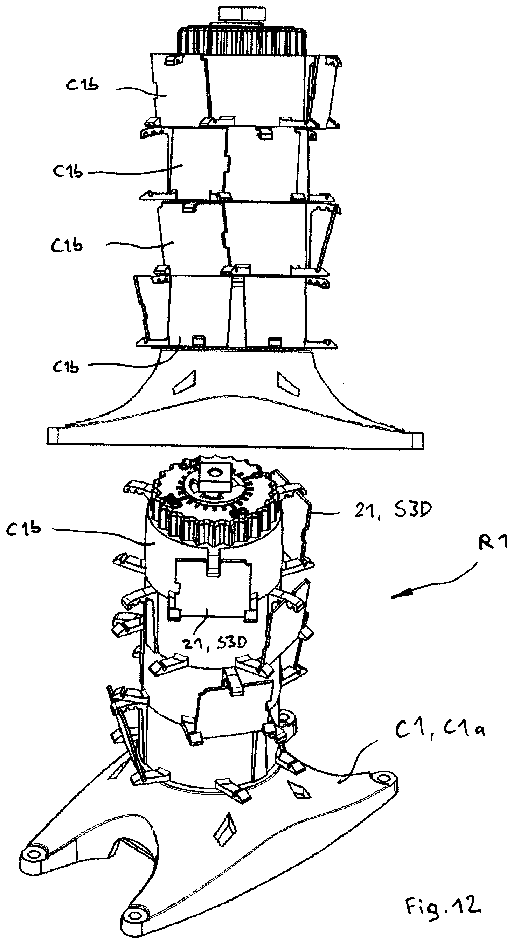

Die Darstellung nach Figur 12 zeigt eine Trägerstruktur C1 die insgesamt mit vier Unterträgern C1b bestückt ist, die wiederum bedarfsgerecht mit 3D-Radarsensoren S3D in geforderten Positionen und Ausrichtungen bestückt sind. Die Unterträger C1b sind baugleich ausgeführt. Die Montage der Platinen 21 daran ist jedoch individuell abgestimmt und auch die Position der Unterträger C1b zueinander ist individuell abgestimmt. Die Konfiguration ist aufgrund der geometrischen Eigenschaften der Unterträger C1b und der Grundstruktur C1a winkel- und lagetreu reproduzierbar.

Nach dem erfindungsgemäßen Konzept können durch optimiert in der Durchgangsanlage platzierte 3D-Radarsensoren Raumpunkdaten mit hoher Auflösung aus optimalen Blickwinkeln und vorzugsweise mehrfachredundant erhoben werden. Die Raumdaten können ggf. unter Auflösungsreduktion und unter Beseitigung von Redundanzen auf einen Hauptdatensatz übertragen werden und dort mit unterschiedlichsten Auswertungsansätzen mit hoher Analysefrequenz und ggf. KI-basiert ausgewertet werden. Die Kalibrierung des Gesamtsystems und Abstimmung der Sensordaten erfolgt vorzugsweise automatisiert auch unter Nutzung der Redundanzdaten, d.h. der Daten aus sich überlagernden Sensorräumen.

Durch das hinsichtlich der Einbindung der Anzahl und Positionierung der 3D-Radarsensoren modular ausbaubare erfindungsgemäße System könne im Bereich der Durchgangsanlagen hochauflösende 3D-Scans abgewickelt werden. Die derart gelieferten Daten können einer optimierten Ansteuerung der Sperrstrukturen zugrunde gelegt werden und für weitere ablauftechnische Ansätze, insbesondere zur Autorisierungsprüfung herangezogen werden.

Der hier beschriebene Ausbau der Pfostenstrukturen oder auch lediglich das Konzept der Bildung von lagetreu montierten 3D-Radarsensorgruppen kann auch dazu herangezogen werden, im Bereich von Bezahlterminals oder Selfscanning-Zonen hochauflösende Rauminformationen zur Objekt-, Personen- und Materiepräsenz und zum Materietransfer durch überwachte Räume zu generieren.

Bei den oben beschrieben Durchgangsanlagen war die Sperrstruktur beispielsweise als Schwenkflügel ausgebildet, es wird ausdrücklich darauf hingewiesen, dass sich die erfindungsgemäße Technik auch für andere Bauformen und Kinematiken der Sperrstrukturen eignet, insbesondere für Schiebe- und Falttürkonzepte, sowie auch für Durchgangsanlagen mit Drehkreuzen.

## Patentansprüche

1. Durchgangsanlage zur Einrichtung eines selektiv sperrbaren Durchgangsweges, mit:
- einer Sperrstruktur, die in eine Sperrstellung bringbar ist, in welcher der Durchgangsweg gesperrt ist und die in eine Freigabestellung bringbar ist, in welcher der Durchgangsweg freigegeben ist, so dass dieser von einer Person passierbar ist;
- einer Antriebseinrichtung zur Verlagerung der Sperrstruktur aus der Sperrstellung in die Freigabestellung,
- einer Steuereinrichtung zur Ansteuerung der Antriebseinrichtung und;
- einer Radareinrichtung zur Erfassung einer für die Steuereinrichtung relevanten Präsenz eines Objektes in einem Raumbereich der sich über dem Durchgangsweg erhebt,
- wobei die Radareinrichtung derart ausgebildet und konfiguriert ist, dass diese hinsichtlich der Raumform des Objektes und seiner Position im erfassten Raumbereich indikative Informationen generiert und
- die Steuereinrichtung derart ausgebildet und konfiguriert ist, dass die Ansteuerung der Antriebseinrichtung der Raumform des erfassten Objektes und seiner Position im erfassten Raumbereich Rechnung trägt.

2. Durchgangsanlage nach Anspruch 1, **dadurch gekennzeichnet, dass** die Radareinrichtung eine 3D-Radareinrichtung ist und die hinsichtlich der Raumform und der Position des Objektes im observierten Raum oberhalb des Durchgangsweges indikativen Informationen als 3D-Daten z.B. in einer, einem zumindest grobgerastert räumlichen Abtastverfahren entsprechenden Auflösung als zeitlich und ortsspezifisch determinierte Voxel bereitgestellt werden.

3. Durchgangsanlage nach Anspruch 2, **dadurch gekennzeichnet, dass** durch Verarbeitung der Voxel-Daten eine Objekterkennung vorgenommen wird und die Raumrichtung der Bewegung des erkannten Objektes/Person und/oder die Bewegungsgeschwindigkeit des Objektes/Person im observierten Raum ermittelt wird.

4. Durchgangsanlage nach wenigstens einem der Ansprüche 1 bis 3, **dadurch gekennzeichnet, dass** anhand der Raumform, der Geschwindigkeit und der Richtung eines erkannten Objekts der Öffnungszeitpunkt und/oder der Schließzeitpunkt abgestimmt wird und/oder dass unter Berücksichtigung der Raumform die Öffnungsrichtung oder Öffnungscharakteristik der Sperrstruktur abgestimmt wird.

5. Durchgangsanlage nach wenigstens einem der Ansprüche 1 bis 4, **dadurch gekennzeichnet, dass** die Radareinrichtung wenigstens einen 3D-Radarsensor umfasst.

6. Durchgangsanlage nach Anspruch 5, **dadurch gekennzeichnet, dass** dieser 3D-Radarsensor im Nahbereich der Sperrstruktur angeordnet ist und einen Raumbereich erfasst, der sich über dem Durchgangsweg erhebt und/oder dass der 3D-Radarsensor in einem Eckbereich angeordnet ist der sich als vertikaler Schnitt aus einer sich entlang eines Randes des Durchgangsweges erstreckenden Vertikalebene und einer Sperrebene der Sperrstruktur ergibt und/oder dass der 3D- Radarsensor derart ausgebildet und angeordnet ist, dass dieser den Torsobereich eines den Durchgangsweges durchquerenden Anwenders erfasst.

7. Durchgangsanlage nach wenigstens einem der Ansprüche 1 bis 6, **dadurch gekennzeichnet, dass** die Radareinrichtung mehrere Radarsensoren umfasst und/oder dass die Radareinrichtung einen oberen Radarsensor und einen unteren Radarsensor umfasst.

8. Durchgangsanlage nach Anspruch 7, **dadurch gekennzeichnet, dass** diese Radarsensoren unterschiedliche Raumbereiche oberhalb des Durchgangsweges scannen.

9. Durchgangsanlage nach wenigstens einem der Ansprüche 1 bis 8, **dadurch gekennzeichnet, dass** einer dieser Radarsensoren als 3D-Radarsensor ausgebildet ist und einer der Radarsensoren als 2D-Radarsensor ausgebildet ist.

10. Durchgangsanlage nach wenigstens einem der Ansprüche 1 bis 8, **dadurch gekennzeichnet, dass** die Sperreinrichtung eine erste Sperrstruktur umfasst, die um eine Vertikalachse schwenkbar ist und dass wenigstens einer der Radarsensoren im Bereich dieser Vertikalachse angeordnet ist, wobei mit der Montage von jeweils zwei Radarsensoren seitlich an der Durchgangsanlage (vgl. Figur 5 ) eine Erkennung der verbotenen Zustände gemäß Tabelle 1 möglich ist.

11. Verfahren zur Ansteuerung der Sperrstruktur einer Durchgangsanlage nach wenigstens einem der Ansprüche 1 bis 10 bei welchem über eine 3D-Radareinrichtung hinsichtlich der Raumform eines Objektes im Bereich des Durchgangsweges indikative Informationen insbesondere Raumpunkte (Voxel) mit einem Zeitwert erfasst werden und diese Informationen in Verbindung mit einer in diesen Daten vorgenommenen Mustererkennung für die Ansteuerung der Antriebseinrichtung der Sperrstruktur Berücksichtigung finden.
